# EUROPEAN PATENT APPLICATION

(11) **EP 4 307 200 A1**
(43) Date of publication of application: **17.01.2024**
(21) Application number: 21930254.4
(22) Date of filing: 09.07.2021
(51) Int. Cl.: G06Q 30/02

(54) **MANGA ADVERTISEMENT PRODUCTION ASSISTANCE SYSTEM, AND MANGA ADVERTISEMENT PRODUCTION ASSISTANCE METHOD**

(30) Priority: 11.03.2021 JP 2021039557
(71) Applicant: Hitachi Solutions, Ltd., Tokyo 140-0002 (JP)
(72) Inventor: SAITO, Sachiho, Tokyo 140-0002 (JP); SHIMADA, Satomi, Tokyo 140-0002 (JP); ICHIMURA, Kenichi, Tokyo 140-0002 (JP)
(74) Representative: Mewburn Ellis LLP
(86) International application number: PCT/JP2021/026002
(87) International publication number: WO 2022/190404

(57) **Abstract**

To create a comic advertisement through a simple procedure. A comic advertisement creation assistance system 1 includes: a template registration part 11 configured to store comic template information containing a plurality of comic images and attribute information of each of the plurality of comic images; and a template recommendation part 20 configured to identify comic images from the comic template information based on advertisement attribute information and comic image attribute information designated by an advertisement creator and comic images previously searched for or designated by users, the comic images being related to the previously searched or designated comic images.

## Description

### [Technical Field]

The present invention relates to a comic advertisement creation assistance system and a comic advertisement creation assistance method.

### [Background Art]

### ===Incorporation by Reference===

This application is based upon and claims the benefit of priority to Japanese Patent Application No. 2021-39557 filed on March 11, 2021, the entire contents of which are incorporated herein by reference.

There are an increasing number of companies attempting to acquire a wider range of customers by creating advertisements with comics (comic advertisements). However, producing comics and creating advertising expressions with them require specialized know-how, which makes it difficult for companies that do not necessarily have a high level of expertise to produce comic advertisements by themselves. For this reason, it is common practice to commission the production of comics for advertisements to comic artists via an advertisement production company.

As peripheral techniques for making a comic advertisement, for example, Patent Literature 1 discloses a technology related to determination of the position and timing of insertion of an advertisement into an electronic book, Patent Literature 2 discloses a technique related to combining of images, Patent Literature 3 discloses a system that displays an advertisement along with an electronic book such as an electronic comic, and Patent Literature 4 discloses an Internet-based comic selling system.

### [Citation List]

### [Patent Literatures]

[PTL 1] Japanese Patent Application Publication No. 2012-123093
[PTL 2] Japanese Patent Application Publication No. 2008-158602
[PTL 3] Japanese Patent Application Publication No. 2002-109359
[PTL 4] Japanese Patent Application Publication No. 2004-341772

### [Summary of Invention]

### [Technical Problem]

However, these are not directly involved in the production of the contents of comic advertisements, and expect expertise in production of comic advertisements. At present, it is still difficult for ordinary companies to produce comic advertisements.

The present invention has been made in view of such circumstances, and an object thereof is to provide a comic advertisement creation assistance system and comic advertisement creation assistance method capable of creating a comic advertisement through a simple procedure.

### [Solution to Problem]

An aspect of the present invention to solve the above object is a comic advertisement creation assistance system comprising: a processor; a memory; a template registration part configured to store comic template information containing a plurality of comic images and attribute information of each of the plurality of comic images; and a template recommendation part configured to identify comic images from the comic template information based on advertisement attribute information and comic image attribute information designated by an advertisement creator and comic images previously searched for or designated by users, the comic images being related to the previously searched or designated comic images.

Another aspect of the present invention to solve the above object is a comic advertisement creation assistance method implemented by an information processing apparatus comprising executing: a template registration process of storing comic template information containing a plurality of comic images and attribute information of each of the plurality of comic images; and a template recommendation process of identifying comic images from the comic template information based on advertisement attribute information and comic image attribute information designated by an advertisement creator and comic images previously searched for or designated by users, the comic images being related to the previously searched or designated comic images.

### [Advantageous Effect of Invention]

According to the present invention, it is possible to create a comic advertisement through a simple procedure.

### [Brief Description of Drawings]

[Fig. 1] Fig. 1 is a diagram illustrating an example of the configuration of a comic advertisement creation assistance system according to an embodiment of the present disclosure.
[Fig. 2] Fig. 2 is a diagram explaining an example of functions included in a comic advertisement creation assistance apparatus.
[Fig. 3] Fig. 3 is a diagram illustrating an example of templates.
[Fig. 4] Fig. 4 is a diagram illustrating an example of a comic advertisement completed by using a template.
[Fig. 5] Fig. 5 is a diagram illustrating an example of a template DB.
[Fig. 6] Fig. 6 is a diagram illustrating an example of a template tag DB.
[Fig. 7] Fig. 7 is a diagram illustrating an example of a template usage result DB.
[Fig. 8] Fig. 8 is a diagram illustrating an example of a template user DB.
[Fig. 9] Fig. 9 is a diagram illustrating an example of a template usage count DB.
[Fig. 10] Fig. 10 is a diagram illustrating an example of a panel DB.
[Fig. 11] Fig. 11 is a diagram illustrating an example of a panel tag DB.
[Fig. 12] Fig. 12 is a diagram illustrating an example of a panel usage result DB.
[Fig. 13] Fig. 13 is a diagram illustrating an example of a template provider DB.
[Fig. 14] Fig. 14 is a diagram illustrating an example of a provider achievement DB.
[Fig. 15] Fig. 15 is a diagram illustrating an example of a ranking DB.
[Fig. 16] Fig. 16 is a diagram explaining an example of the hardware configuration of information processing apparatuses.
[Fig. 17] Fig. 17 is a diagram explaining an overview of processing performed in the comic advertisement creation assistance system.
[Fig. 18] Fig. 18 is a flowchart explaining an example of a template registration process.
[Fig. 19] Fig. 19 is a flowchart explaining details of a template registration acceptance process.
[Fig. 20] Fig. 20 is a flowchart explaining details of a template update-correction process.
[Fig. 21] Fig. 21 is a flowchart explaining an example of a template usage process.
[Fig. 22] Fig. 22 is a flowchart explaining details of a template usage acceptance process.
[Fig. 23] Fig. 23 is a flowchart explaining details of a questionnaire registration process.
[Fig. 24] Fig. 24 is a flowchart explaining details of a template recommendation process.
[Fig. 25] Fig. 25 is a flowchart explaining details of a template switching process.
[Fig. 26] Fig. 26 is a diagram illustrating an example of an attribute selection menu screen.
[Fig. 27] Fig. 27 is a diagram illustrating an example of a search result display screen.
[Fig. 28] Fig. 28 is a flowchart explaining details of a template usage fee distribution process.
[Fig. 29] Fig. 29 is a diagram explaining details of a learning process.
[Fig. 30] Fig. 30 is a flowchart explaining an overview of a template editing process.
[Fig. 31] Fig. 31 is a flowchart explaining details of a speech balloon addition-editing process.
[Fig. 32] Fig. 32 is a flowchart explaining details of a text addition-editing process.
[Fig. 33] Fig. 33 is a flowchart explaining details of a sound effect addition-editing process.
[Fig. 34] Fig. 34 is a flowchart explaining details of a background editing process.
[Fig. 35] Fig. 35 is a flowchart explaining details of a saving process.
[Fig. 36] Fig. 36 is a flowchart explaining details of an image size designation process.
[Fig. 37] Fig. 37 is a flowchart explaining details of an SNS posting process.
[Fig. 38] Fig. 38 is a flowchart explaining an example of an automatic template generation process.
[Fig. 39] Fig. 39 is a flowchart explaining an example of a ranking setting process.
[Fig. 40] Fig. 40 is a flowchart explaining an example of an incentive setting process.

### [Description of Embodiments]

### -System Configuration-

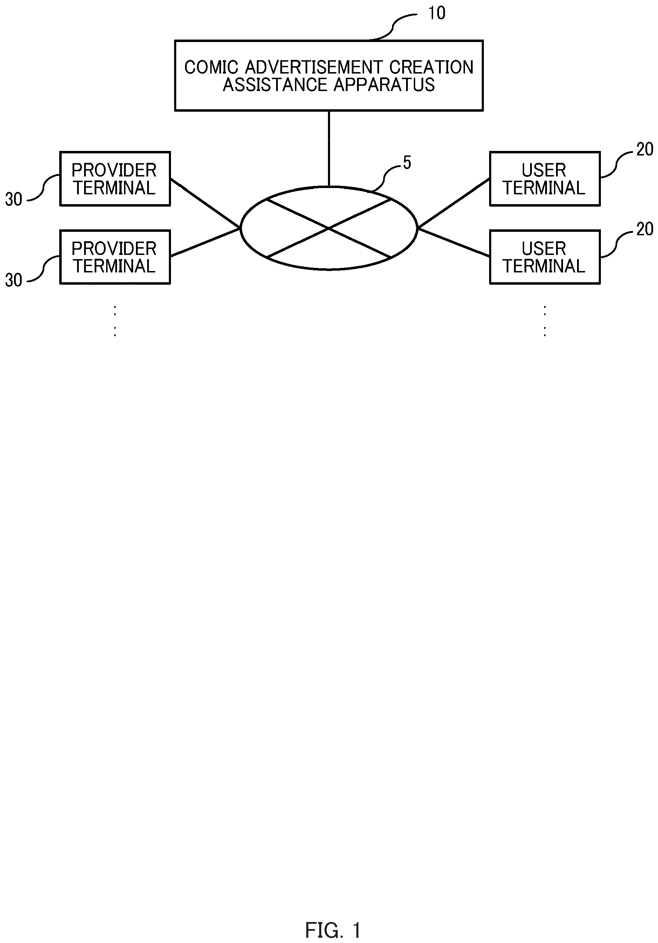

Fig. 1 is a diagram illustrating an example of the configuration of a comic advertisement creation assistance system 1 according to an embodiment of the present disclosure. The comic advertisement creation assistance system 1 includes: provider terminals 30 used by providers (such as comic artists) who create data as materials of comic images (templates, specifically, comic images each formed of an image of one or more panels); user terminals 20 used by users (creators of advertisements, such as companies) who create those comic advertisements; and a comic advertisement creation assistance apparatus 10 which creates comic advertisements based on templates received from the provider terminals 30 and various pieces of information received from the user terminals 20 (e.g., questionnaire answer information and template search information to be described later).

The comic advertisement creation assistance apparatus 10, the user terminal 20, and the provider terminal 30 are coupled to one another through a wired or wireless communication network 5, such as a LAN (Local Area Network), a WAN (Wide Area Network), the Internet, or a dedicated line.

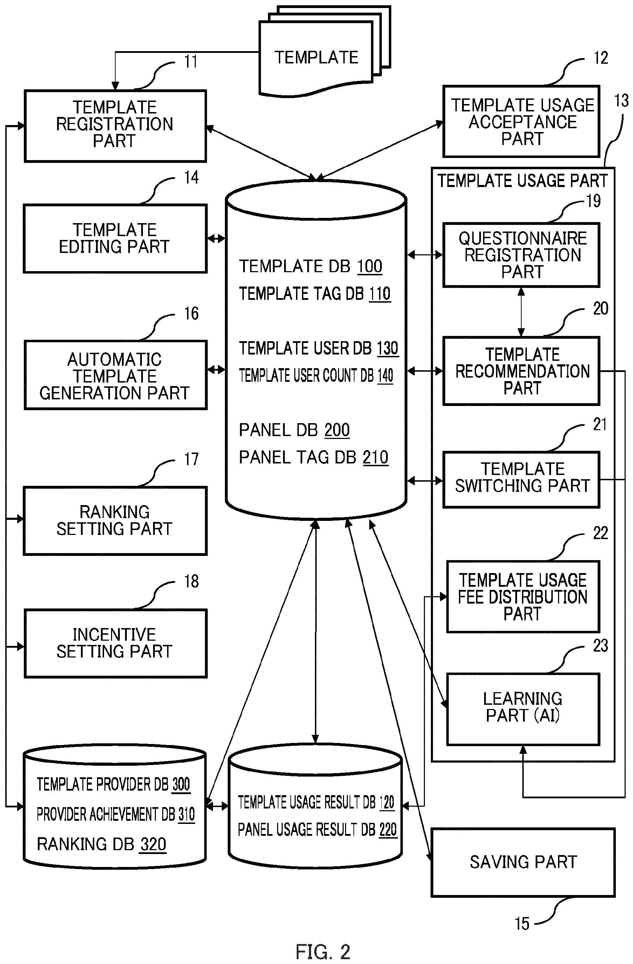

Fig. 2 is a diagram explaining an example of functions included in the comic advertisement creation assistance apparatus 10. The comic advertisement creation assistance apparatus 10 includes, as its functional parts: a template registration part 11 which accepts registration of templates by providers; a template usage acceptance part 12 which accepts login processes for users and the like; a template usage part 13 which determines a template to be used by a user and, for example, downloads it; a template editing part 14 which edits the template that the user decided to use to create a comic advertisement; a saving part 15 which registers the created comic advertisement in an external information processing apparatus; an automatic template generation part 16 which automatically generates new templates from templates registered by providers; a ranking setting part 17 which sets ranking information of the templates registered by providers; and an incentive setting part 18 which sets incentives (special rewards) for the providers based on the ranking information and the like.

Note that the external information processing apparatus is an information processing apparatus on which customers that comic advertisements are targeted at can share various information, such as a management server for an SNS (Social Network Service), for example. In the embodiment of the present disclosure, an external information processing system refers to a server apparatus which manages an SNS having such target customers as its members.

The template usage part 13 includes a questionnaire registration part 19 which, before a user uses a template, has the user answer a questionnaire to present templates suitable for the user, a template recommendation part 20 which identifies templates that are currently more suitable for the user from among the presented templates, a template switching part 21 which switches a template selected by the user from among the templates identified by the template recommendation part 20 to a template of another type, a template usage fee distribution part 22 which distributes the usage fee (reward) of the template that the user decided to use to the provider of the template and the system administrator (of the comic advertisement creation assistance system 1), and the learning part 23 which learns the contents of the processing by the template recommendation part 20 and the template switching part 21.

Specifically, for example, the template registration part 11 stores databases (comic template information) containing a plurality of comic images (templates) and attribute information of the plurality of comic images. Note that the template registration part 11 accepts registration of comic template information by each of the plurality of provider terminals 30 of comic creators.

Also, the template registration part 11 stores comic template information containing a plurality of comic images (templates) and information on the components in the plurality of comic images (e.g., characters, backgrounds, speech balloons, and the like in the panels).

The questionnaire registration part 19 accepts an input of information on an advertisement from an advertisement creator (user), and extracts a plurality of templates from the comic template information based on the designated information.

The template recommendation part 20 identifies templates related to comic images previously searched for or designated by users from the comic template information based on advertisement attribute information and template attribute information designated by the advertisement creator and templates previously searched for or designated by users.

In the embodiment of the present disclosure, the template recommendation part 20 uses a learned model (hereinafter referred to as "recommendation analysis model") to identify those related templates. Specifically, with a machine learning approach, the learning part 23 creates a recommendation analysis model which receives advertisement attribute information and template attribute information designated (by a user) and outputs identification information (such as management numbers) of templates in the comic template information. The template recommendation part 20 identifies the identification information of templates in the comic template information by inputting advertisement attribute information (such as information on the business or industry type) and comic image attribute information designated by an advertisement creator who wishes to create a comic advertisement this time into the learned model.

Note that, as for the method of the machine learning, the learning part 23 generates the recommendation analysis model by, for example, performing machine learning in which the attribute information of advertisements of users who previously used templates (e.g., all users who used the advertisement creation assistance apparatus 1) and the attribute information of the templates used by those users are used as input values, and the management numbers of the templates previously searched for or finally selected (designated) by the users (e.g., all users) are used as training labels (correct answer values of output values).

The template switching part 21 accepts an input of attributes of components in a template selected from among the templates identified by the template recommendation part 20 (e.g., the touch of the drawing, the ages and clothes of characters appearing in panels, and the like) from the advertisement creator, and identifies other templates in the template information corresponding to the selected template with the components changed to other components having the inputted attributes.

The automatic template generation part 16 generates new comic images by combining components in a plurality of comic images (e.g., characters, backgrounds, speech balloons, and the like in the panels) in the comic template information.

The template editing part 14 accepts addition of dialogue about the advertisement to the template selected from among the templates identified by the template recommendation part 20, the addition being proposed by the advertisement creator.

The saving part 15 sends the template with the dialogue added thereto (comic image) as a comic advertisement to an SNS server apparatus on which a plurality of terminals of customers the advertisement is targeted at can share information.

The template usage fee distribution part 22 calculates amounts of money to be given to the creator of the template selected from among the templates identified by the template recommendation part 20 and the administrator of the comic advertisement creation assistance system 1 as rewards for the template.

The ranking setting part 17 identifies the creator of the template selected from among the templates identified by the template recommendation part 20, and creates ranking information of the creator according to the number of times the creator has been identified.

As for an incentive for the template selected from among the templates identified by the template recommendation part 20, the incentive setting part 18 calculates the amount of incentive to be given to the creator of the template according to the number of times the template was previously selected.

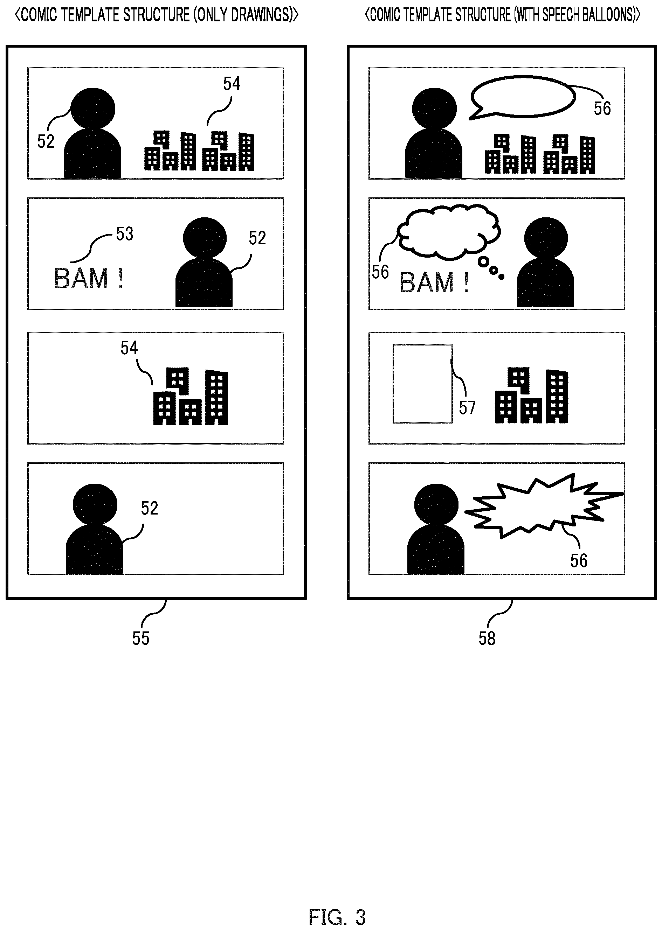

Here, Fig. 3 is a diagram illustrating an example of templates. A template 50 includes one or more panels 51. As the template 50, there are a template 55 in which a character 52, a sound effect 53 (such as an onomatopoeic or imitative word), a background 54, or the like is included as a component in advance, and a template 58 in which, in addition to these components, a speech balloon 56 or a text frame 57 is included as a new component.

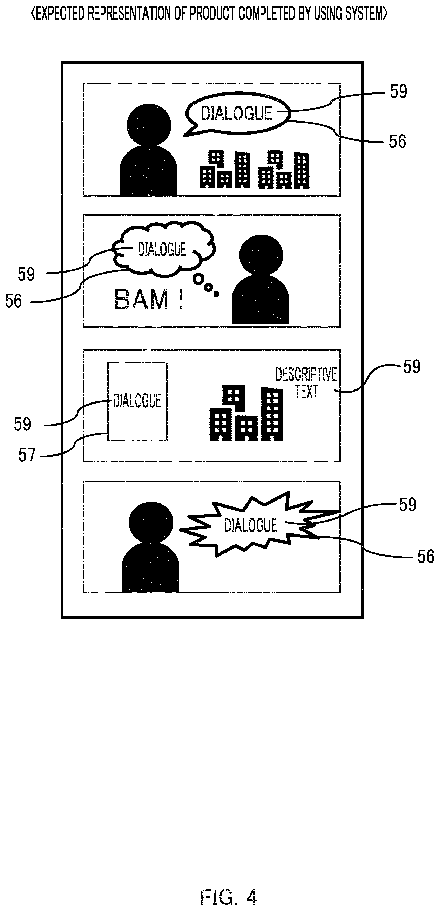

Fig. 4 is a diagram illustrating an example of a comic advertisement completed by using a template 50. In the case of a template 55 before completion, speech balloons 56, text frames 57, and dialogue or descriptive text 59 are added as new components. Alternatively, in the case of another template 58 before completion, dialogue or descriptive text 59 is added as new components.

As illustrated in Fig. 2, the comic advertisement creation assistance apparatus 10 also stores various information (comic template information) on template images, their attributes, and the like. Specifically, the comic advertisement creation assistance apparatus 10 stores: a template DB 100 storing basic information of templates; a template tag DB 110 storing attribute information (tag information) of the templates; a template usage result DB 120 storing information on a previous usage result of each template; a template user DB 130 storing attribute information of users using the templates; a template usage count DB 140 storing information on the number of users of each template; a panel DB 200 storing basic information of the panels in the templates; a panel tag DB 210 storing attribute information (tag information) of the panels; a panel usage result DB 220 storing information on a previous usage result of each panel; a template provider DB 300 storing information on the providers of the templates; a provider achievement DB 310 storing information on a previous usage result of the templates provided by each provider; and a ranking DB 320 storing information on a ranking of the providers.

Next, details of the databases will be described.

### (Template DB)

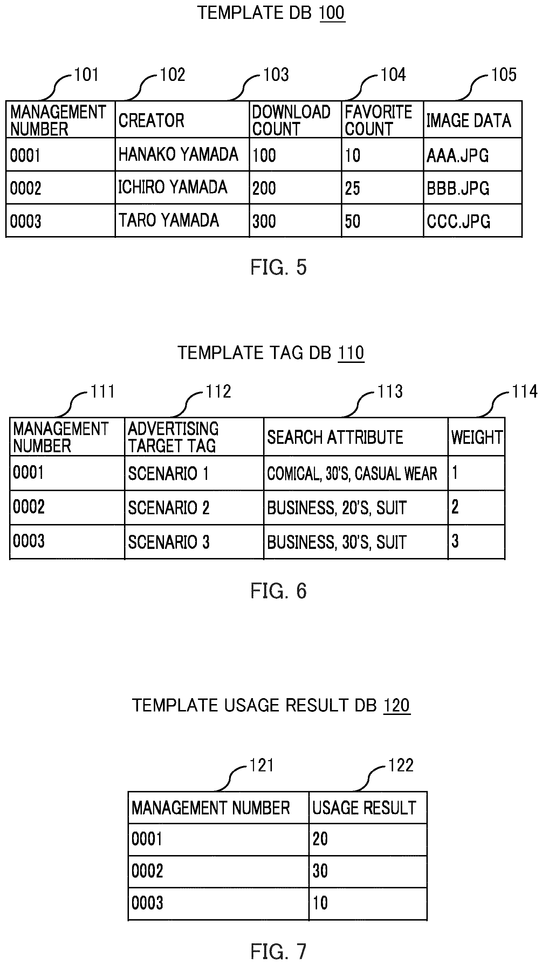

Fig. 5 is a diagram illustrating an example of the template DB 100. The template DB 100 has, as data items: a management number 101 of each template; a creator 102 of the template; a download count 103 of the template (the number of times the template has been sent to user terminals 20 from the comic advertisement creation assistance apparatus 10); a favorite count 104 (the number of users who have set the template as a "favorite" on the comic advertisement creation assistance apparatus 10); and image data 105 of the template.

### (Template Tag DB)

Fig. 6 is a diagram illustrating an example of the template tag DB 110. The template tag DB 110 has, as data items: a management number 111 of each template; a tag 112 representing the pattern of the scenario of the template (comic); a search attribute 113 representing the contents of a search which a user terminal 20 makes to find and select the template; and a weight 114 set for the search attribute 113. Note that the weight 114 is a value on a feature quantity set by a learned model to be described later.

### (Template Usage Result DB)

Fig. 7 is a diagram illustrating an example of the template usage result DB 120. The template usage result DB 120 has, as data items: a management number 121 of each template; and a usage result 122 representing the number of times the template has been downloaded on user terminals 20.

### (Template User DB)

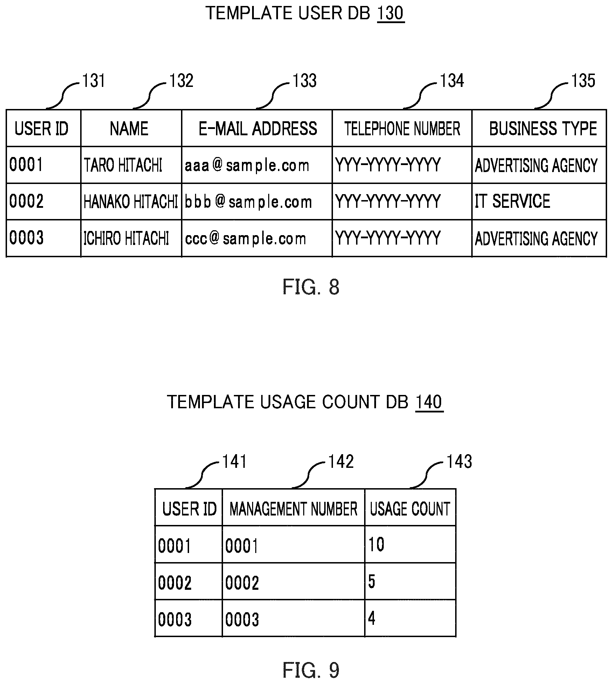

Fig. 8 is a diagram illustrating an example of the template user DB 130. The template user DB 130 has, as data items: a user ID 131 of each user wishing to use templates: a name 132 of the user; an e-mail address 133 of the user; a telephone number 134 of the user; and a business type 135 of the user. Note that the template user DB 130 may include attribute information such as the age, sex, and the like of each user, attributes (such as age and sex) of customers to which advertisements of the user are targeted, and the like.

### (Template Usage Count DB)

Fig. 9 is a diagram illustrating an example of the template usage count DB 140. The template usage count DB 140 has, as data items: a user ID 141 of each user; a management number 142 of each template downloaded by the user; and a usage count 143 of the template.

### (Panel DB)

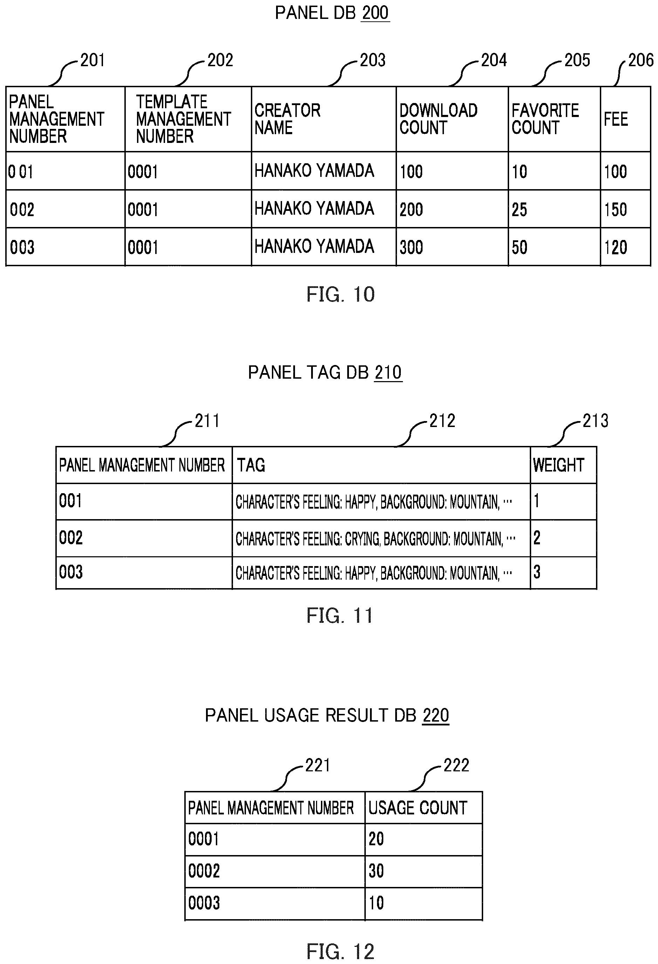

Fig. 10 is a diagram illustrating an example of the panel DB 200. The panel DB 200 has, as data items: a management number 201 of each panel; a management number 202 of the template to which the panel belongs; a creator name 203 of (the template including) the panel; a download count 204 of the panel; a favorite count 205 of the panel; and a usage fee 206 of the panel.

### (Panel Tag DB)

Fig. 11 is a diagram illustrating an example of the panel tag DB 210. The panel tag DB 210 has, as data items: a management number 211 of each panel; a tag 212 representing attribute information of the panel; and a weight 213 of the panel. As the tag 212, for example, information such as the type of the character, background, sound effect, or the like forming the panel (such as clothes, feeling, or object type), a pattern of combination of these, the touch of the drawing of the panel, or the like is set. Also, the weight 213 is a value on a feature quantity set by a learned model to be described later.

### (Panel Usage Result DB)

Fig. 12 is a diagram illustrating an example of the panel usage result DB 220. The panel usage result DB 220 has, as data items: a management number 221 of each panel; and a usage count 222 representing the number of times the panel or the template to which the panel belongs has been selected by users.

### (Template Provider DB)

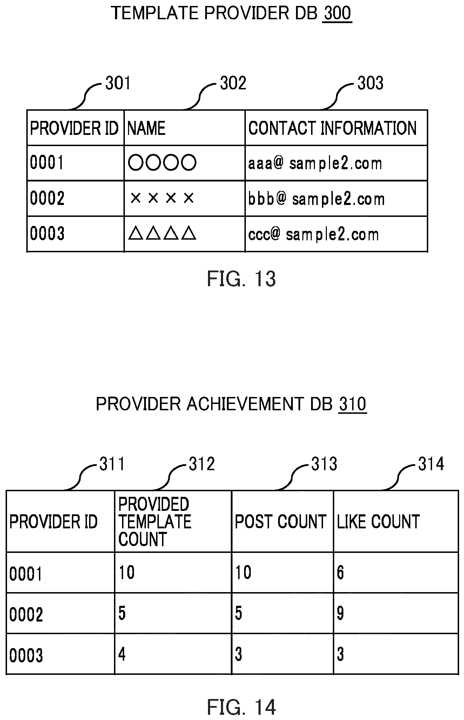

Fig. 13 is a diagram illustrating an example of the template provider DB 300. The template provider DB 300 has, as data items: a provider ID 301 of each of the providers of the templates; a name 302 of the provider; and contact information 303 of the provider.

### (Provider Achievement DB)

Fig. 14 is a diagram illustrating an example of the provider achievement DB 310. The provider achievement DB 310 has, as data items: a provider ID 311 of each provider; a provided template count 312 representing the number of templates registered by the provider; a post count 313 representing the number of comic advertisements created with templates registered by the provider that have been posted on SNSs; a like count 314 representing the number of reactions given from members of the SNSs.

### (Ranking DB)

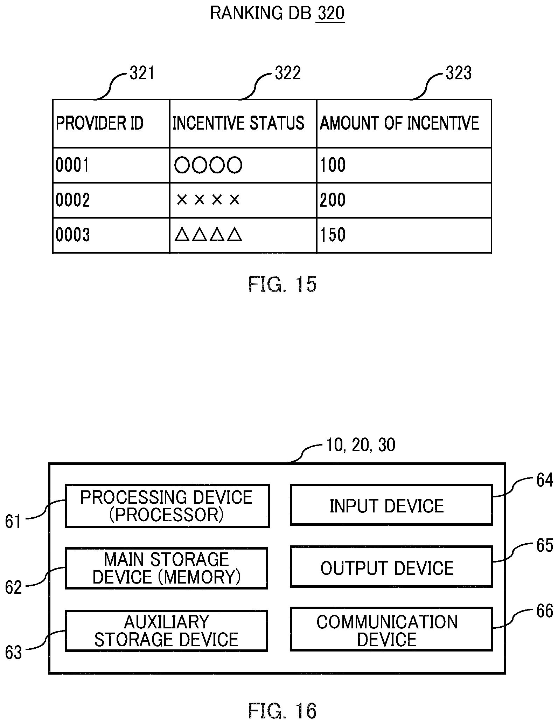

Fig. 15 is a diagram illustrating an example of the ranking DB 320. The ranking DB 320 has, as data items, a provider ID 321 of each provider; an incentive status 322 given to the provider (e.g., information on an incentive ranking); and an amount of incentive 323 for the provider.

Here, Fig. 16 is a diagram explaining an example of the hardware configuration of information processing apparatuses being the comic advertisement creation assistance apparatus 10, the user terminals 20, and the provider terminals 30. Each information processing apparatus includes: a processing device 61, such as a CPU (Central Processing Unit); a main storage device 62, such as a RAM (Random Access Memory) and a ROM (Read Only Memory); an auxiliary storage device 63, such as an HDD (Hard disk drive) or an SSD (Solid State Drive); an input device 64 including a keyboard, a mouse, a touchscreen, and so on; an output device 65 which includes a monitor (display) and so on and displays screens; and a communication device 66 which communicates with other information processing apparatuses.

The processing device 61 of each information processing apparatus reads out and executes programs stored in the main storage device 62 or the auxiliary storage device 63 to thereby implement functions of the information processing apparatus. Meanwhile, these programs are stored in a recording medium which can be read by the information processing apparatus, such as a secondary storage device, a storage device such as a non-volatile semiconductor memory, a hard disk drive, or an SSD, an IC card, an SD card, or a DVD, for example.

Next, processing performed in the comic advertisement creation assistance system 1 will be described.

### -Outline of Processing-

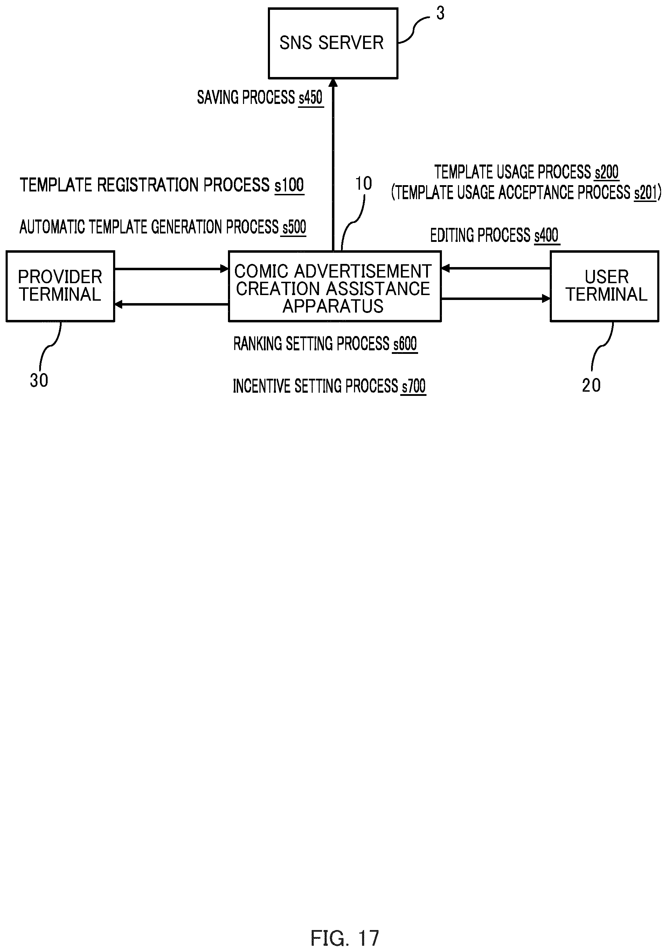

Fig. 17 is a diagram explaining an outline of the processing performed in the comic advertisement creation assistance system 1. First, the comic advertisement creation assistance apparatus 10 executes a template registration process s100 of registering or updating a template sent from a provider terminal 30.

The comic advertisement creation assistance apparatus 10 executes a template usage process s200 of performing identification of a template to be used and the like, the template usage process s200 including a template usage acceptance process s201 of accepting login of a user wishing to use a registered template by the corresponding user terminal 20. Moreover, the comic advertisement creation assistance apparatus 10 executes a template editing process s400 of accepting editing by the user terminal 20 involving addition of dialogue to the template to create a comic advertisement. Furthermore, the comic advertisement creation assistance apparatus 10 executes a saving process s450 of saving the comic advertisement created by the user to an SNS server apparatus 3.

Meanwhile, in response to a request from a provider terminal 30, the comic advertisement creation assistance apparatus 10 executes an automatic template generation process s500 of creating new templates based on templates registered in the comic advertisement creation assistance apparatus 10.

Also, the comic advertisement creation assistance apparatus 10 executes a ranking setting process s600 of setting information on the ranking of templates on the SNSs or the like, and an incentive setting process s700 of setting information on the incentives (special rewards) to be given to providers which are determined by the ranking and the like.

These processes will be described below.

### -Template Registration Process-

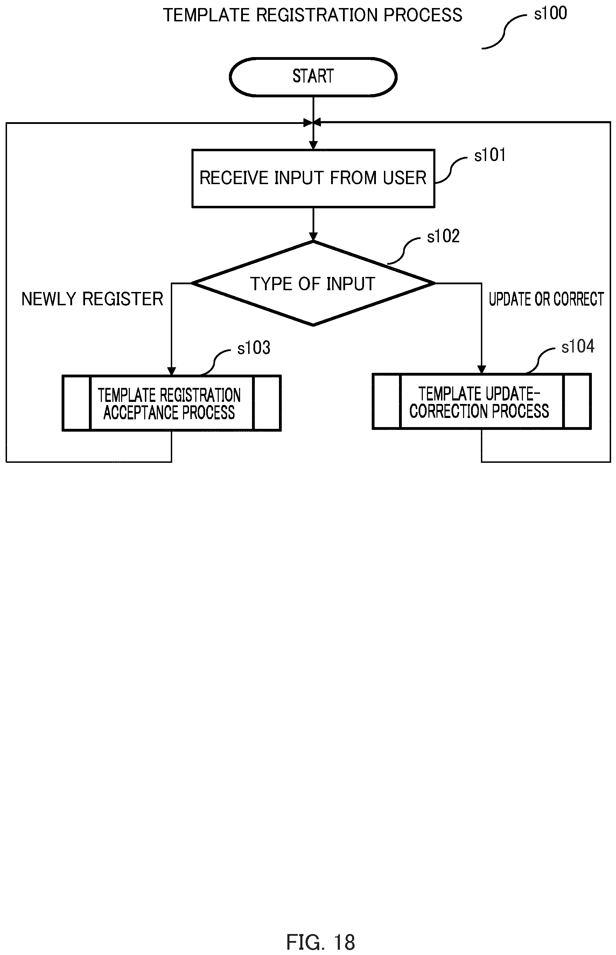

Fig. 18 is a flowchart explaining an example of the template registration process s100. First, the template registration part 11 of the comic advertisement creation assistance apparatus 10 accepts an input on registration of a template from a provider (s101).

For example, the template registration part 11 causes a provider terminal 30 to display a predetermined menu screen, and accepts an input of either an instruction to newly register a template or an instruction to update or correct a template from the provider (provider terminal 30).

The template registration part 11 executes a process of s103 if the content of the instruction input in s101 is to newly register a template (s102: NEWLY REGISTER), and executes a process of s104 if the content of the instruction input in s101 is to update or correct a template (s102: UPDATE OR CORRECT).

In s103, the template registration part 11 executes a template registration acceptance process s103 of accepting registration of a template as a new template. Details of the template registration acceptance process s103 will be described later. Thereafter, the processes from s101 will be repeated.

In s104, the template registration part 11 executes a template update-correction process s104 of accepting update or correction of information of a template. Thereafter, the processes from s101 will be repeated.

### -Template Registration Acceptance Process-

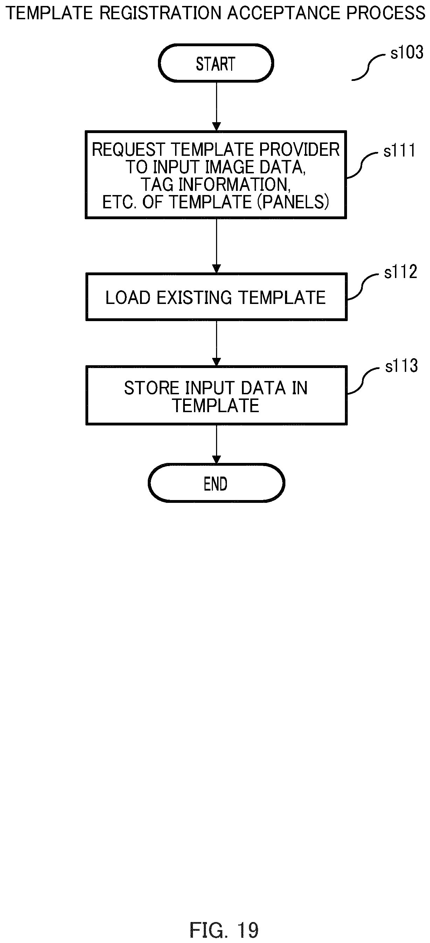

Fig. 19 is a flowchart explaining details of the template registration acceptance process s103.

The template registration part 11 accepts an input of the image of a template, its attribute information, and the like (s111). For example, the template registration part 11 causes the provider terminal 30 to display a predetermined input screen, and accepts an input of the name and contact information of the provider (creator), an image file of the template, which includes one or more panels, and tag information of the template from the provider (provider terminal 30).

The template registration part 11 loads databases associated with templates such as the template DB 100, the template tag DB 110, the panel DB 200, the panel tag DB 210, and the template provider DB 300 (s112). The template registration part 11 then sets the data input in sill in these loaded databases (s113).

For example, the template registration part 11 sets the data input in sill as new records in the template DB 100, the template tag DB 110, the panel DB 200, the panel tag DB 210, and the template provider DB 300. Moreover, the template registration part 11 performs a predetermined image recognition process on the image input in sill, and sets attribute information of the image of each recognized panel as the tag 212 of the panel in the panel tag DB 210. The template registration acceptance process s103 then ends.

### -Template Update-Correction Process-

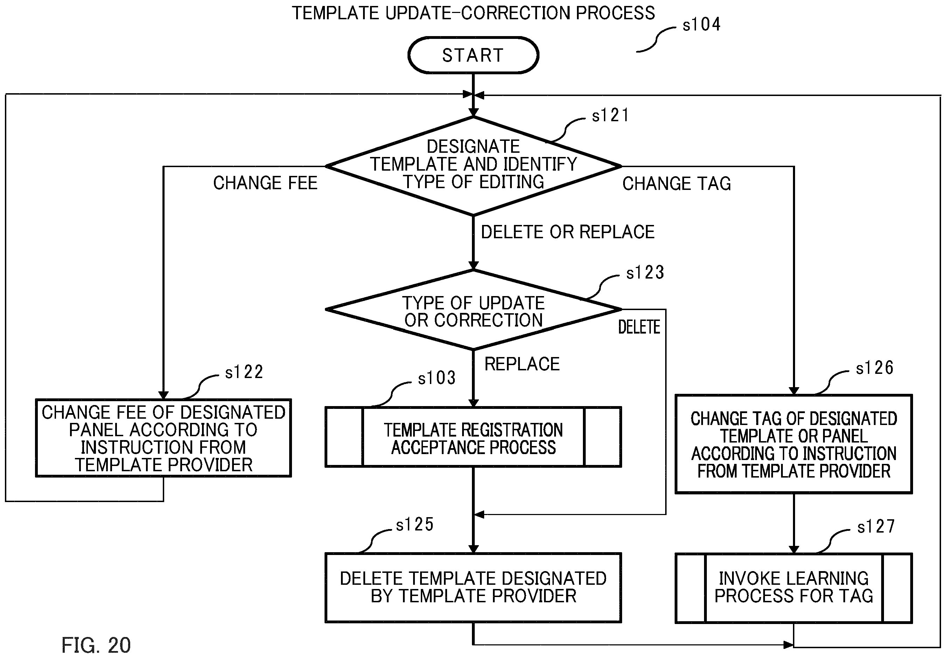

Fig. 20 is a flowchart explaining details of the template update-correction process s104.

First, the template registration part 11 identifies the type of the process to be executed (changing the fee of a template, deleting or replacing the template, or changing the tag information of the template) (s121). For example, the template registration part 11 causes the provider terminal 30 to display a predetermined menu screen, and accepts an input representing the type of the process and an input designating the template to be subjected to the process from the provider (provider terminal 30).

The template registration part 11 executes a process of s122 in the case of changing the fee of the template (s121: CHANGE FEE). The template registration part 11 executes a process of s124 in the case of deleting or replacing the template (s123: DELETE OR REPLACE). The template registration part 11 executes a process of s126 in the case of changing the tag information of the template (s121: CHANGE TAG).

In s122, the template registration part 11 changes the fee of each panel of the designated template. For example, the template registration part 11 accepts designation of each panel in the designated template and designation of its fee by the provider, and sets information on the designated fee of the panel as the usage fee 206 in the record under the management numbers of the designated template and panel in the panel DB 200. Thereafter, the processes from s121 will be repeated.

In s123, the template registration part 11 determines whether to delete or replace the template. For example, the template registration part 11 causes the provider terminal 30 to display a predetermined menu screen, and accepts an input of information on whether to delete or replace the template from the provider (provider terminal 30).

The template registration part 11 executes a process of s125 to be described later in the case of deleting the template (s123: DELETE). The template registration part 11 executes a template registration acceptance process s103 to be described later and then executes the process of s125 in the case of replacing the template (s123: REPLACE).

In s125, the template registration part 11 deletes information on the designated template. For example, the template registration part 11 deletes all records in the template DB 100, the template tag DB 110, the template usage result DB 120, the template user DB 130, the template usage count DB 140, the panel DB 200, the panel tag DB 210, the panel usage result DB 220, the template provider DB 300, the provider achievement DB 310, and the ranking DB 320 under the management number of the designated template (and of the panels forming it). Thereafter, the processes from s121 will be repeated.

In s126, the template registration part 11 changes attribute information of the designated template or its panel.

For example, the template registration part 11 accepts an input of changed tag information of the template or panel from the provider (provider terminal 30). The template registration part 11 then sets the input tag information as the tag 112 in the record of the designated template in the template tag DB 110, or the template registration part 11 sets the input tag information as the tag 212 in the record of the designated panel in the panel tag DB 210. The template update-correction process s104 then ends.

Subsequently, the template registration part 11 invokes a learning process s300 with the attribute information of the template or panel changed in s126 as a parameter to be delivered (s127). Details of the learning process s300 will be described later. Thereafter, the processes from s121 will be repeated.

### -Template Usage Process-

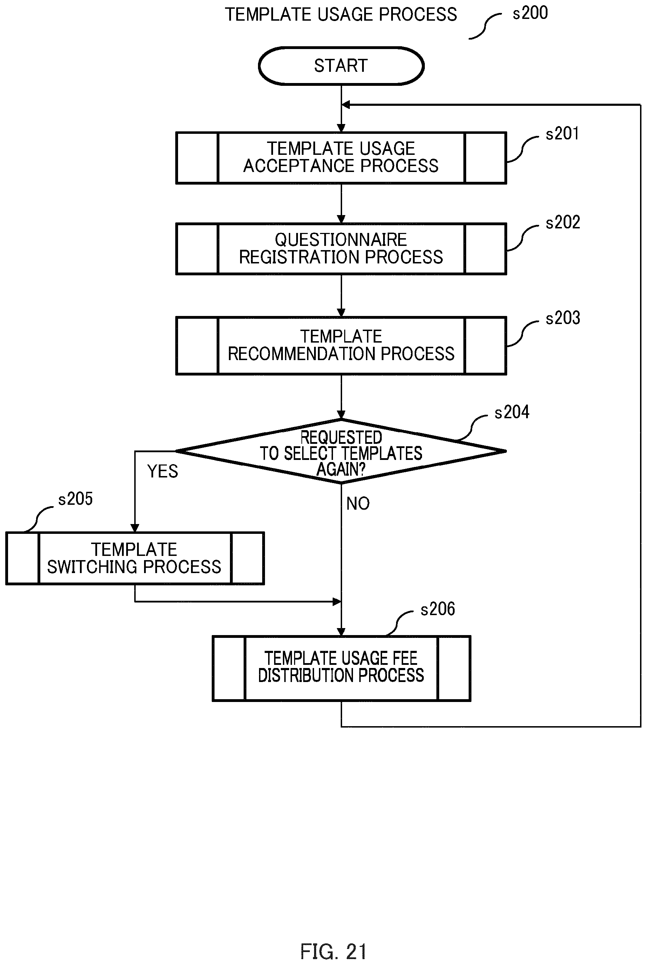

Fig. 21 is a flowchart explaining an example of the template usage process s200.

The template usage acceptance part 12 executes the template usage acceptance process s201 of accepting registration of a user wishing to use templates in response to a predetermined input from the corresponding user terminal 20. Details of the template usage acceptance process s201 will be described later.

The questionnaire registration part 19 executes a questionnaire registration process s202 of displaying templates based on answers input in a questionnaire by the registered user. Details of the questionnaire registration process s202 will be described later.

The template recommendation part 20 executes a template recommendation process s203 of identifying templates currently suitable for the user registered in s201 based on information on the registered user and the process result of the questionnaire registration process s202, and accepts selection of any template from among the identified templates by the user. Details of the template recommendation process s203 will be described later.

The template switching part 21 determines whether to switch to other templates (search for templates again) based on the templates identified by the template recommendation process s203 (s204). For example, the template switching part 21 causes the user terminal 20 to display a predetermined selection screen, and accepts an input of information on whether to switch to other templates from the user (user terminal 20).

In the case of switching the templates (s204: YES), the template switching part 21 executes a template switching process s205 and then executes a template usage fee distribution process s206. On the other hand, in the case of not switching the templates (s204: NO), the template switching part 21 executes the template usage fee distribution process s206. Thereafter, the processes from s201 will be repeated.

### -Template Usage Acceptance Process-

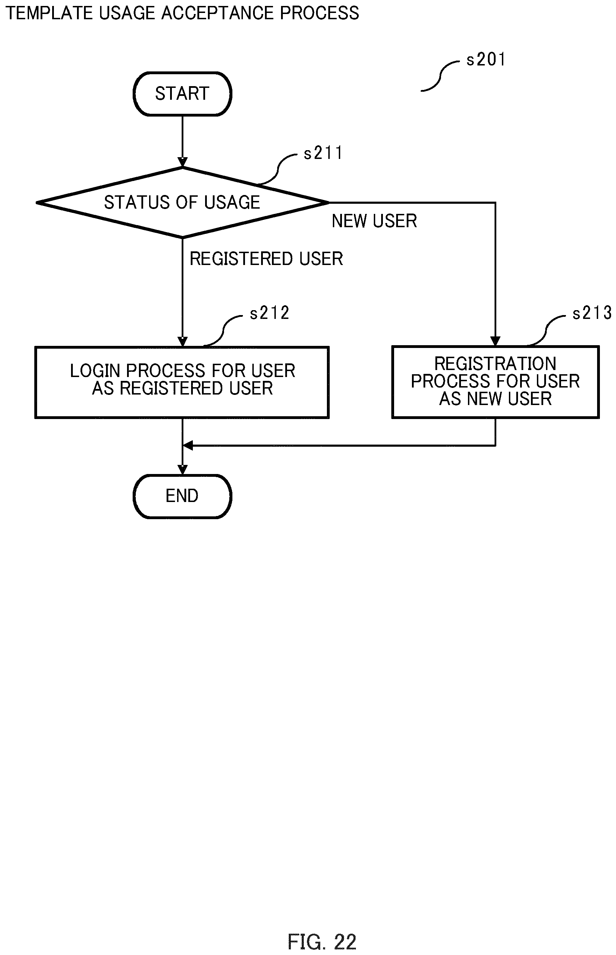

Fig. 22 is a flowchart explaining details of the template usage acceptance process s201. The template usage acceptance part 12 checks whether to register a new user or to perform a login process for a registered user. For example, the template usage acceptance part 12 causes the user terminal 20 to display a predetermined inquiry screen, and accepts an input of answers to the inquiry from the user (user terminal 20).

The template usage acceptance part 12 performs a process of s213 in the case of registering a new user (s211: NEW USER). The template usage acceptance part 12 performs a process of s212 in the case of performing a login process for a registered user (s211: REGISTERED USER).

In s213, the template usage acceptance part 12 accepts an input of information on the user necessary for newly registering the user, such as an ID and a password, from the user. The template usage acceptance process s201 then ends.

In s212, the template usage acceptance part 12 accepts an input of information necessary for the login process, such as an ID or a password, from the user (user terminal 20). The template usage process s200 ends when the input information is not valid. A subsequent process is executed when the input information is valid. This ends the template usage acceptance process s201.

### -Questionnaire Registration Process-

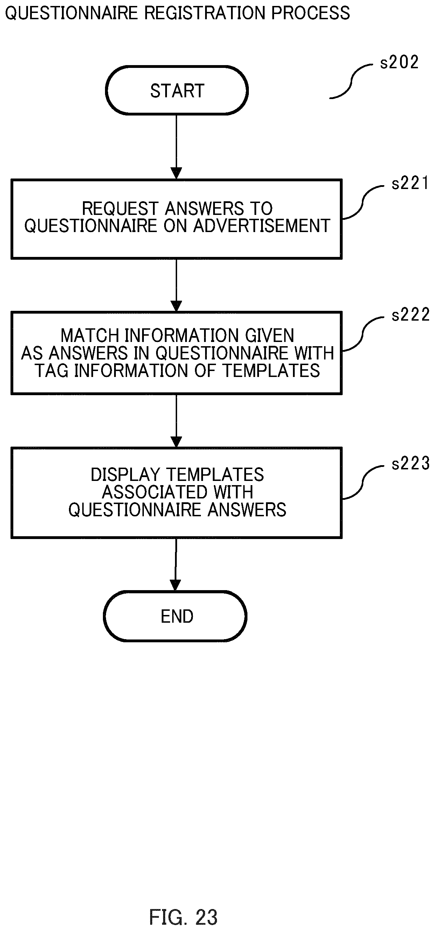

Fig. 23 is a flowchart explaining details of the questionnaire registration process s202. The questionnaire registration part 19 accepts an input of answers to a questionnaire on a comic advertisement to be created from the user (s221).

For example, the questionnaire registration part 19 causes the user terminal 20 to display a question screen on the comic advertisement (e.g., a screen asking about attributes of the comic advertisement (template or panel) including the business type of customers to which the advertisement is targeted or attributes of the target customers (such as their ages, sex, or clothes, an advertised product, such as a possession, or a service) and accepts an input of answers to those questions from the user (user terminal 20).

The questionnaire registration part 19 searches for templates matching the answers input in s221 (s222). For example, the questionnaire registration part 19 identifies records with information containing the same contents as the answers input in s221 among the records in the template tag DB 110. The questionnaire registration part 19 also identifies records with information containing the same contents as the answers input in s221 among the records in the panel tag DB 210. Note that, instead of searching for templates with the same contents as the answers to the questionnaire, the questionnaire registration part 19 may search for templates with contents similar to the answers to the questionnaire by, for example, referring to a predetermined database in which answers to the questionnaire and pieces of tag information of templates or pieces of information similar to those are associated with one another.

The questionnaire registration part 19 displays the result of the search in s222 on a screen (s223). For example, the questionnaire registration part 19 displays a list of images of templates associated with the records identified in s221 on a screen. This ends the questionnaire registration process s202.

### -Template Recommendation Process-

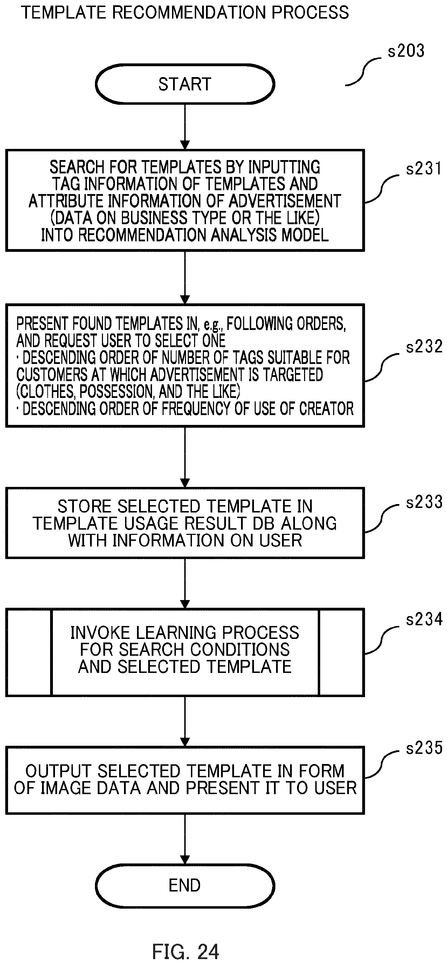

Fig. 24 is a flowchart explaining details of the template recommendation process s203. The template recommendation part 20 searches for templates that can be recommended to the user by inputting attribute information of the templates searched for in the questionnaire registration process s202 and attribute information of the advertisement or the user into a recommendation analysis model (s231).

For example, the template recommendation part 20 causes the recommendation analysis model to output the management numbers of one or more templates by inputting the tags 112 in the template tag DB 110 identified in the questionnaire registration process s202 and the business type 135 in the template user DB 130 into the recommendation analysis model.

Note that the template recommendation part 20 may identify templates by other means than a learned model like the recommendation analysis model. For example, the template recommendation part 20 stores a relation between attribute information of templates, attribute information of advertisements or users, and previous template usage results of the users as a database, and identifies templates in records in this database that best match template attribute information and advertisement or user attribute information input by a user of interest.

The template recommendation part 20 displays the templates output in s231 in a predetermined order on a screen. Then, the template recommendation part 20 accepts selection of any template from among the displayed templates by the user (s232).

For example, the template recommendation part 20 displays the templates in descending order of the number of keywords set as tag information that are related to the business type of target customers. Specifically, the template recommendation part 20 identifies the order of display of the templates by extracting a list of words for the business type of the target customers from a database storing keywords for business types (such as clothes and possessions), and sequentially identifying records in the panel tag DB 210 having any of the words in the word list registered as the tags 212.

Also, the template recommendation part 20 displays the templates, for example, in descending order of the frequency of use of the provider (comic artist) by users. Specifically, the template recommendation part 20 identifies the order of display of the templates by referring to the usage results 122 in the template usage result DB 120 and the creators 102 in the template DB 100, obtaining a list of creators whose templates were used by users, and calculating the usage count of each creator's templates.

Then, the template recommendation part 20 registers information on the template selected in s232 in the template usage result DB 120 (s233). For example, the template recommendation part 20 adds "1" to the usage result 122 in the record in the template usage result DB 120 under the ID of the user and the management number of the template selected in s232.

The template recommendation part 20 invokes the learning process s300 of performing machine learning of the recommendation analysis model with each of the template or panel search input in s231 (an input of template or panel attributes and user attributes) and the information on the template selected in s232 as a parameter to be delivered (s234). Details of the learning process s300 will be described later.

The template recommendation part 20 displays an image of the template selected in s232 on a screen (s235). This ends the template recommendation process s203.

### -Template Switching Process-

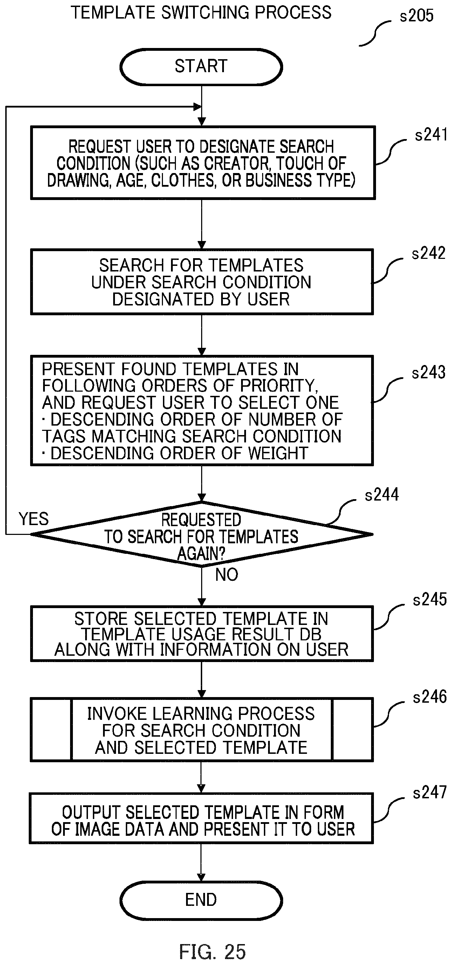

Fig. 25 is a flowchart explaining details of the template switching process s205. The template switching part 21 accepts an input of a template or panel search condition (switching condition) from the user for switching the templates identified in the questionnaire registration process s202 (s241). For example, the template switching part 21 causes the user terminal 20 to display a screen which accepts an input of a search condition such as the creator of the templates, the clothes of characters in panels of the templates, the business type of target customers, the age of the user, or the touch of the drawing of the templates (panels) (attribute selection menu screen).

### (Attribute Selection Menu Screen)

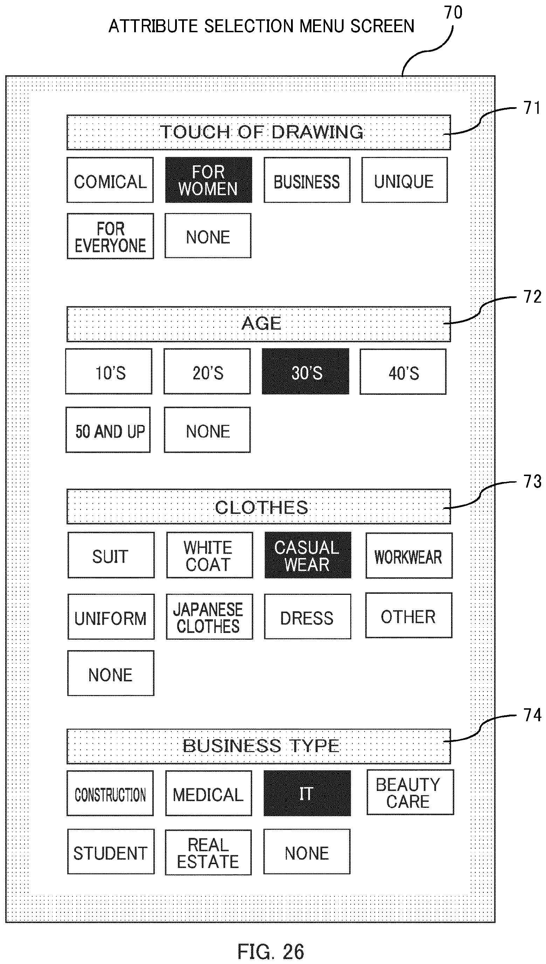

Here, Fig. 26 is a diagram illustrating an example of an attribute selection menu screen 70. The attribute selection menu screen 70 has selection sections for information on templates. In the example of the diagram, the attribute selection menu screen 70 has: a first selection section 71 that accepts selection of the touch of drawing; a second selection section 72 that accepts selection of the ages of customers; a third selection section 73 that accepts selection of the clothes of characters appearing in panels; and a fourth selection section 74 that accepts selection of the business type of target customers.

Subsequently, as illustrated in s242 in Fig. 25, the template switching part 21 searches for other templates having an attribute matching the attribute in the search condition input in s241. For example, the template switching part 21 identifies all of all records in the template tag DB 110 in which information matching the template search condition is set as the search attribute 113 and all records in the panel tag DB 210 in which information matching the template search condition is set as the tag 212.

The template switching part 21 displays a list of templates found in s242 in a predetermined order on a search result display screen. Then, the template switching part 21 accepts selection of any template from among the displayed templates by the user (s243).

For example, the template switching part 21 displays the templates in descending order of the number of search condition keywords matching the search attribute 113 in the template tag DB 110 or the tag 212 in the panel tag DB 210.

Also, the template switching part 21, for example, refers to the template tag DB 110 and displays the templates in descending order of the weight 114.

### (Search Result Display Screen)

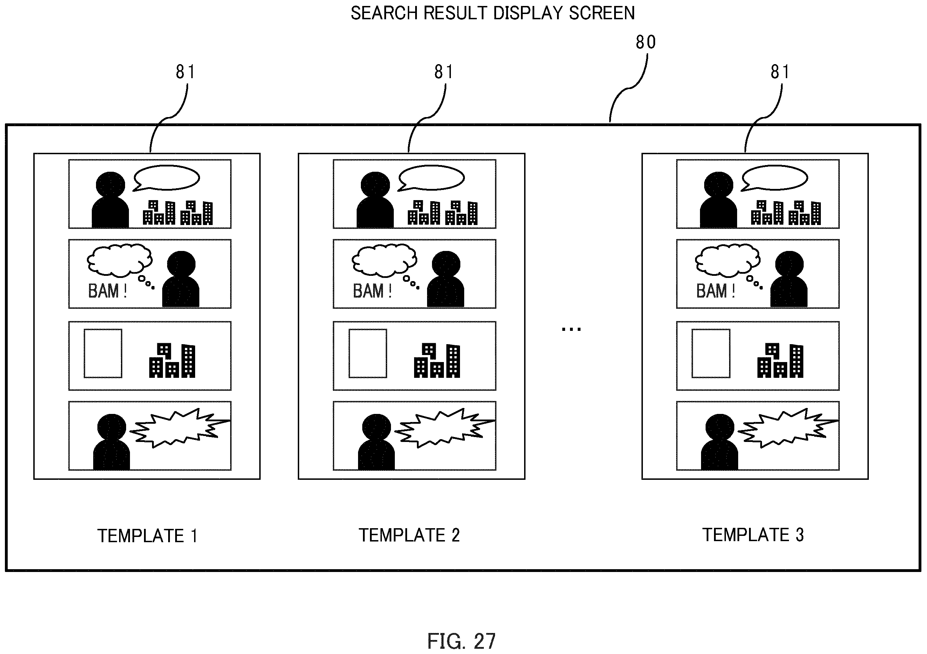

Here, Fig. 27 is a diagram illustrating an example of a search result display screen 80 displayed as a result of using search inputs in the attribute selection menu screen 70. On the search result display screen 80, a plurality of templates 81 are displayed in order of the degree of match with the search condition keywords, the weight of the template, or the like.

Then, as illustrated in s244 in Fig. 25, the template switching part 21 determines whether to switch the templates again. For example, the template switching part 21 causes the user terminal 20 to display a screen asking about whether to switch the templates, and accepts an input on whether to switch the templates from the user.

The template switching part 21 repeats the processes from s241 in the case of switching the templates (s244: YES). The template switching part 21 executes processes from s245 in the case of not switching the templates (s244: NO).

In s245, the template switching part 21 stores the template or panel selected in s243 as a usage result in the template usage result DB 120 or the panel usage result DB 220. For example, the template switching part 21 adds "1" to the usage result 122 in the record in the template usage result DB 120 under the management number of the selected template. Alternatively, for example, the template switching part 21 adds "1" to the usage count 222 in the record in the panel usage result DB 220 under the management number of the selected panel.

The template switching part 21 invokes the learning process s300 with each of the search condition (attribute information) input in s242 and information on the template selected in s243 as a parameter to be delivered (s246). Details of the learning process s300 will be described later.

The template switching part 21 displays a screen obtained by switching the template selected in the questionnaire registration process s202 to the template selected in s243, and determines that template as a template selected by the user (s247). Incidentally, the template switching part 21 may send the image of the template to the user terminal 20. This ends the template switching process s205.

### -Template Usage Fee Distribution Process-

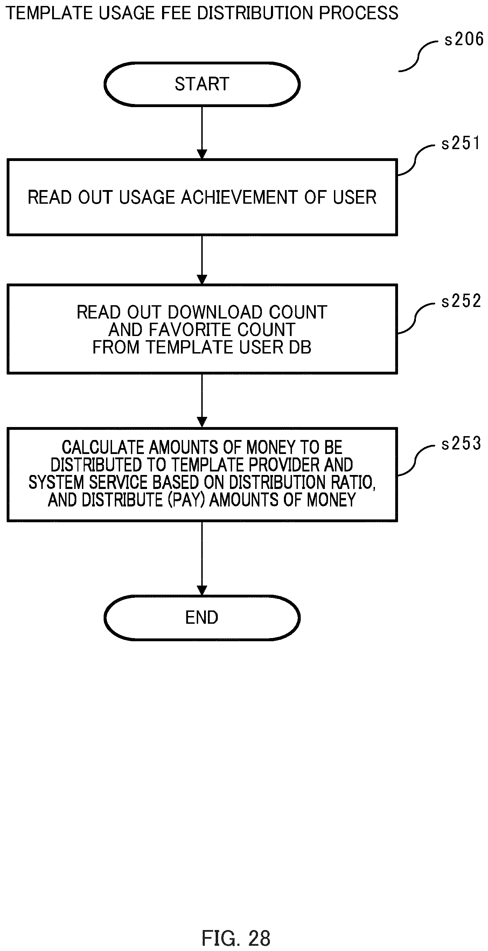

Fig. 28 is a flowchart explaining details of the template usage fee distribution process s206. From the template usage count DB 140, the template usage fee distribution part 22 obtains the usage count 143 in the record of the template selected by the user in the template recommendation process s203 or the template switching process s205 (s251).

Moreover, from the template DB 100, the template usage fee distribution part 22 obtains the download count 103 and the favorite count 104 of the template selected in the template recommendation process s203 or the template switching process s205 (s252). Furthermore, the template usage fee distribution part 22 obtains data on the distribution ratio between the provider of the template and the system administrator for cost distribution.

The template usage fee distribution part 22 calculates the usage fees (rewards) of the template selected by the user to be given to the provider and the administrator based on the pieces of data obtained in s251 and s252 (s253). For example, the template usage fee distribution part 22 calculates the distribution ratio for the provider of the template based on the pieces of data obtained in s251 and s252. Note that the distribution ratio increases the larger the number of times the template has been used by users or the larger the number of times the template has been downloaded or registered as a favorite by users, for example. Moreover, based on the amount of reward for the template indicated by the usage fee 206 in the panel DB 200, the template usage fee distribution part 22 calculates the usage fees to be given to the provider and the administrator according to the calculated distribution ratio. Then, utilizing a predetermined payment system, the template usage fee distribution part 22 performs a process of paying the amounts of money calculated to remit them to the provider of the template and the administrator. This ends the template usage fee distribution process s206.

### -Learning Process-

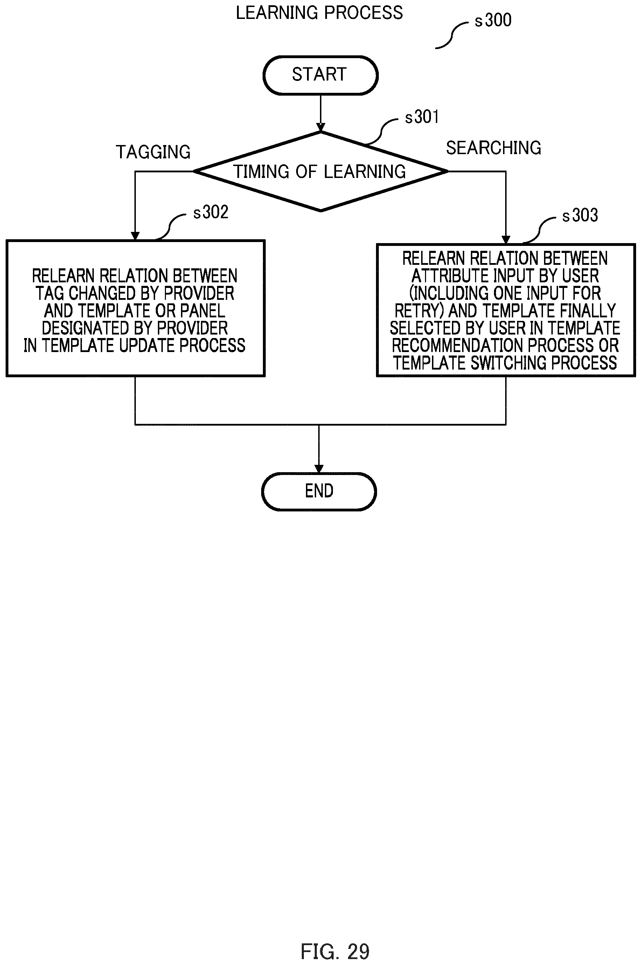

Fig. 29 is a diagram explaining details of the learning process s300.

The learning part 23 checks the timing at which the learning process s300 was invoked by checking the parameter delivered when the learning process s300 was invoked (s301).

The learning part 23 executes a process of s302 in the case where the delivered parameter is tag information (attribute information) of a template or panel, specifically, in the case where the learning process s300 was invoked in the template update-correction process s104 (s301: TAGGING). On the other hand, in the case where the delivered parameter is a template search condition or a template selection result, specifically, in the case where the learning process s300 was invoked in the template recommendation process s203 or the template switching process s205 (s301: SEARCHING), the learning part 23 executes a process of s303.

In s302, with the recommendation analysis model, the learning part 23 relearns the relation between the attribute information of the template or panel designated to be changed by the user in s126 and the template (its management number or the like) designated in s121. As a result, the weight 114 in the template tag DB 110 or the weight 213 in the panel tag DB 210 is changed. This ends the learning process s300.

In the case where the learning process s300 was invoked in the template recommendation process s203, then, in s303, the learning part 23 relearns the relation between the template or panel attribute information and advertisement or user attribute information input for a search in s231 and the template (its management number or the like) selected by the user in s232 with the recommendation analysis model. As a result, the weight 114 in the template tag DB 110 or the weight 213 in the panel tag DB 210 is changed. This ends the learning process s300.

In the case where the learning process s300 was invoked in the template switching process s205, then, in s303, the learning part 23 performs machine learning of the relation between the template or panel attribute information and advertisement or user attribute information input for a search in s241 and the template (its management number or the like) selected by the user in s243 with the recommendation analysis model. As a result, the weight 114 in the template tag DB 110 or the weight 213 in the panel tag DB 210 is changed. This ends the learning process s300.

### -Template Editing Process-

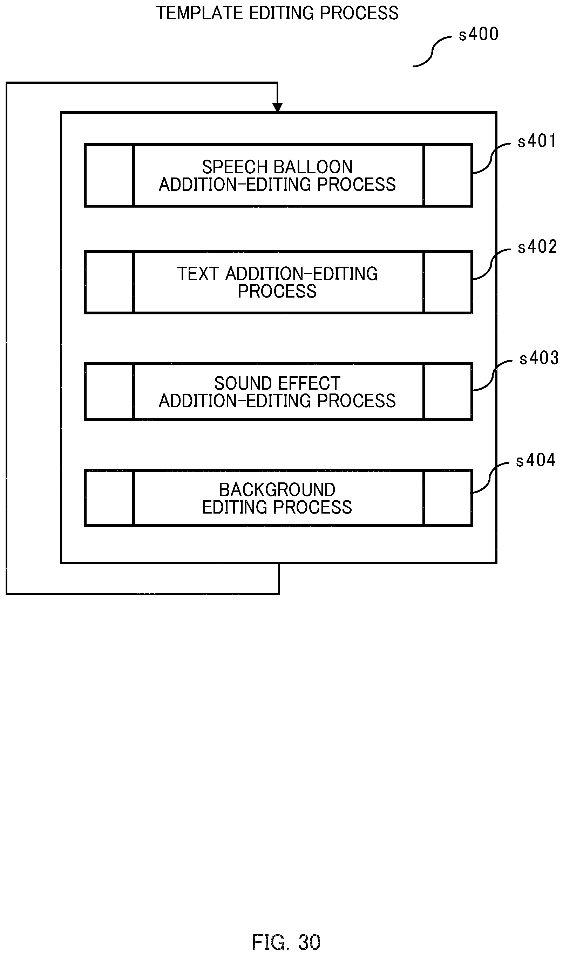

Fig. 30 is a flowchart explaining an overview of the template editing process s400.

In response to a predetermined input from a user terminal 20, the template editing part 14 executes a speech balloon addition-editing process s401 of adding speech balloons to or editing speech balloons in panels in a template selected by the user. Details of the speech balloon addition-editing process s401 will be described later.

Also, in response to a predetermined input from a user terminal 20, the template editing part 14 executes a text addition-editing process s402 of adding text (a sentence, words, or the like forming the content of an advertisement) to or editing the text in speech balloons in panels in a template selected by the user. Details of the text addition-editing process s402 will be described later.

Also, in response to a predetermined input from a user terminal 20, the template editing part 14 executes a sound effect addition-editing process s403 of adding sound effects to or editing sound effects in panels in a template selected by the user. Details of the sound effect addition-editing process s403 will be described later.

Also, in response to a predetermined input from a user terminal 20, the template editing part 14 executes a background editing process s404 of editing backgrounds in panels in a template selected by the user. Details of the background editing process s404 will be described later.

Note that the order of execution of the above processes is not limited. For example, the template editing part 14 causes the user terminal 20 to display a menu screen on which the user selects which process to execute and inputs the selection, and accepts the selection by the user.

Then, in response to accepting a predetermined input from the user terminal 20, the template editing part 14 ends the editing of the template and stores the edited template as an image of a comic advertisement. The template editing part 14 sends this image of the comic advertisement to the user terminal 20 to let the user terminal 20 download it.

Details of the processes related to editing will be described below.

### -Speech Balloon Addition-editing Process-

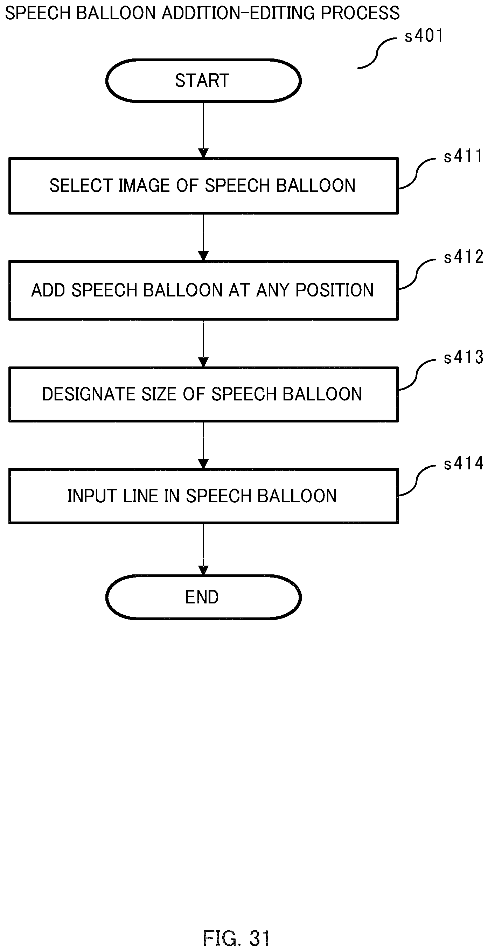

Fig. 31 is a flowchart explaining details of the speech balloon addition-editing process s401. The template editing part 14 accepts selection of a template to be subjected to addition or editing of a speech balloon by the user (user terminal 20) as necessary, and then accepts selection of the speech balloon to be added or edited (s411). For example, the template editing part 14 causes the user terminal 20 to display a selection screen displaying a list of images of speech balloons, and accepts selection of a speech balloon by the user.

The template editing part 14 places the speech balloon selected in s411 at any position designated by the user (s412) . Moreover, the template editing part 14 sets the size of the speech balloon placed in s412 by accepting designation of the size of the speech balloon by the user (s413).

The template editing part 14 accepts an input of dialogue (a sentence, words, or the like forming the content of the advertisement) for the speech balloon set in s413 from the user, and places the input dialogue in the speech balloon (s414). This ends the speech balloon addition-editing process s401.

### -Text Addition-editing Process-

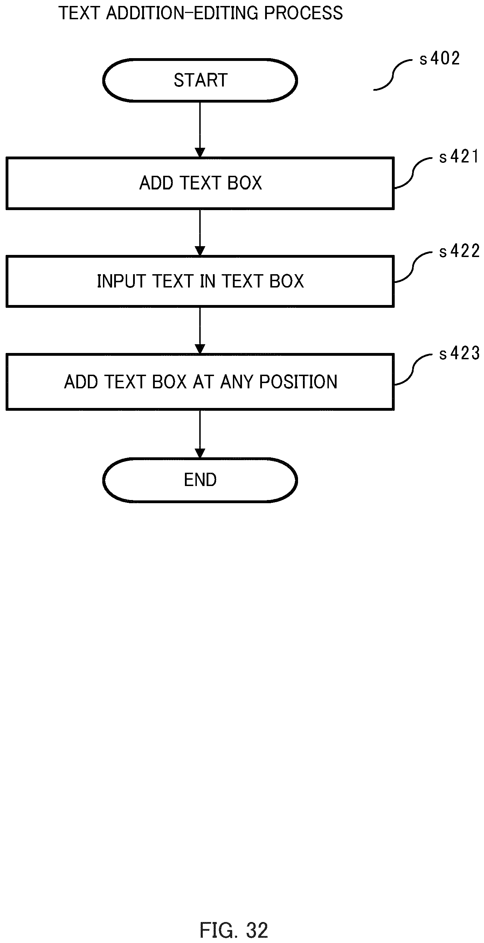

Fig. 32 is a flowchart explaining details of the text addition-editing process s402. The template editing part 14 accepts selection of a template to be subjected to addition or editing of text by the user (user terminal 20) as necessary, and then creates a region (text box) to input the text to be added or edited (s421).

The template editing part 14 accepts an input of the text to be input into the text box created in s421 (s422). For example, the template editing part 14 causes the user terminal 20 to display a screen to accept an input of text, and accepts an input of the text from the user.

The template editing part 14 places the text box with the text input therein in s422 at any position in the template designated by the user (s423). This ends the text addition-editing process s402.

### -Sound Effect Addition-editing Process-

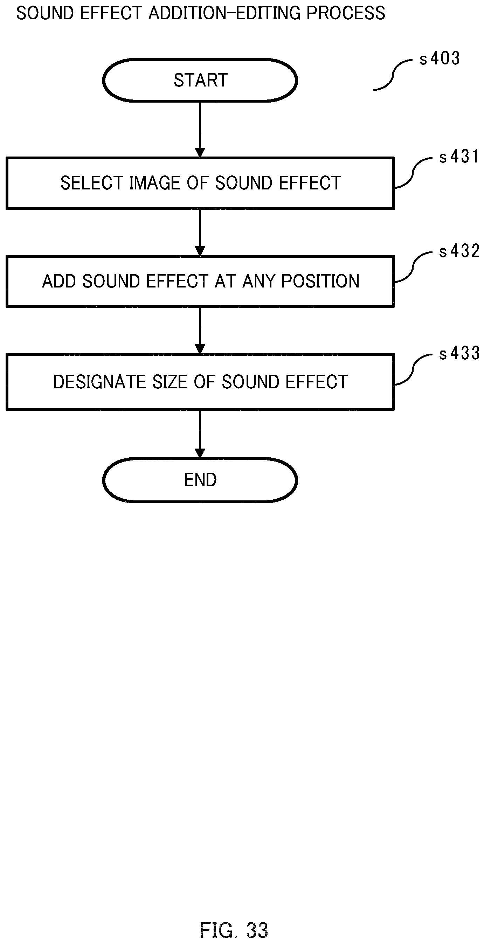

Fig. 33 is a flowchart explaining details of the sound effect addition-editing process s403. The template editing part 14 accepts selection of a template to be subjected to addition or editing of a sound effect by the user (user terminal 20) as necessary, and then accepts selection of the sound effect to be added or edited (s431). For example, the template editing part 14 causes the user terminal 20 to display a selection screen displaying a list of images or text representing sound effects, and accepts selection of a sound effect by the user.

The template editing part 14 places the sound effect selected in s431 at any position in the template designated by the user (s432). Moreover, the template editing part 14 sets the size of the sound effect placed in s432 by accepting designation of the size of the sound effect by the user (s433). This ends the sound effect addition-editing process s403.

### -Background Editing Process-

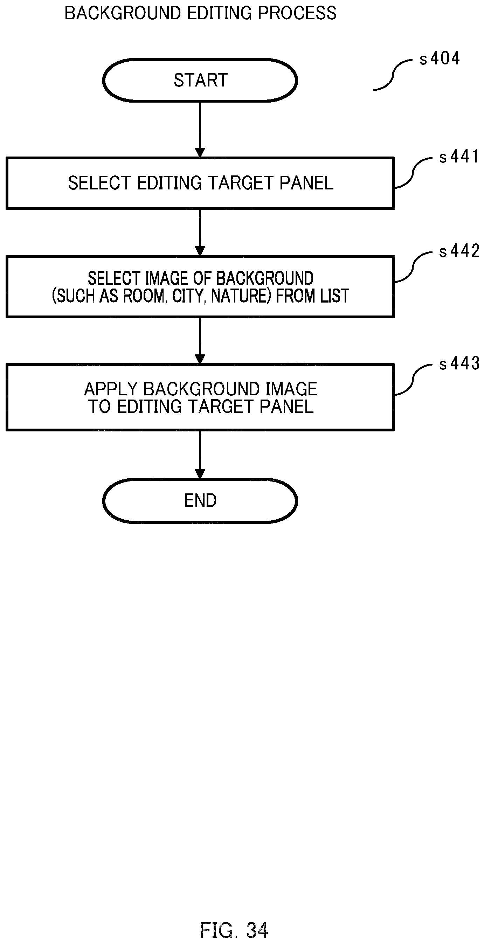

Fig. 34 is a flowchart explaining details of the background editing process s404. The template editing part 14 accepts selection of a template and panel to be subjected to addition or editing of a background by the user (user terminal 20) as necessary (s441).

The template editing part 14 accepts selection of the background to be added or edited (such as the image, pattern, or color of the background) (s442). For example, the template editing part 14 causes the user terminal 20 to display a selection screen displaying a list of background images, and accepts selection of a background by the user.

The template editing part 14 applies the background image selected in s442 to the panel selected in s411 (s443). This ends the background editing process s404.

As described above, the template editing part 14 is capable of implementing flexible editing functions on components (characters, backgrounds, speech balloons, sound effects) in templates (e.g., inserting a speech balloon and changing its position, changing the type and color of a background, inserting a sound effect and changing its position, and the like).

### -Saving Process-

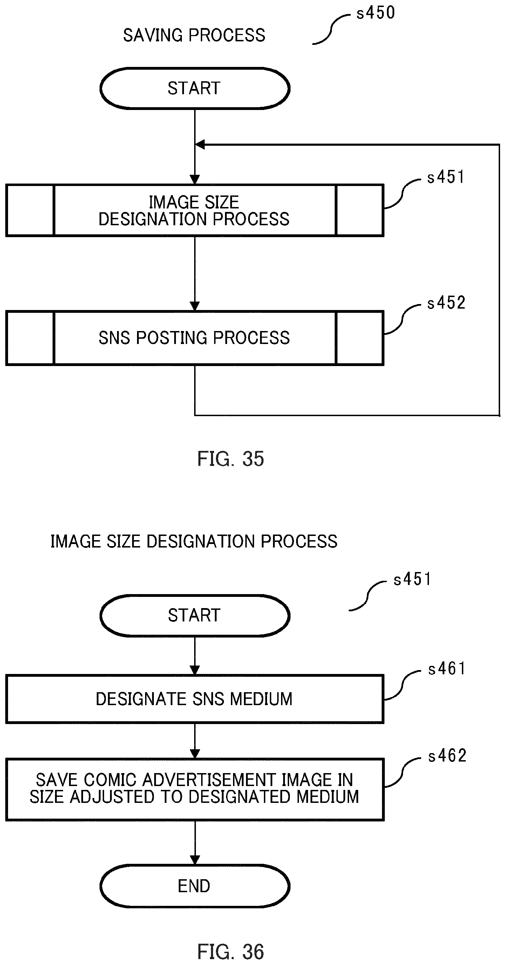

Next, Fig. 35 is a flowchart explaining details of the saving process s450. In response to an input designating an image of a comic advertisement created in the template editing process s400 from a user terminal 20, the saving part 15 executes an image size designation process s451 of designating the size of that image in which it is to be posted on an SNS. Details of the image size designation process s451 will be described later.

The saving part 15 executes an SNS posting process S452 of posting the image with its size designated in s451 on the SNS. Details of the SNS posting process s452 will be described later. Thereafter, the processes from s451 will be repeated.

### -Image Size Designation Process-

Fig. 36 is a flowchart explaining details of the image size designation process s451. The saving part 15 identifies an SNS to post the image of the comic advertisement (s461). For example, the saving part 15 causes the provider terminal 30 to display a selection screen displaying a list of SNSs, and accepts selection of an SNS to post the image by the provider.

The saving part 15 changes the size of the image of the comic advertisement to a size supported by the SNS selected in s461 (s462). This ends the image size designation process s451.

### -SNS Posting Process-

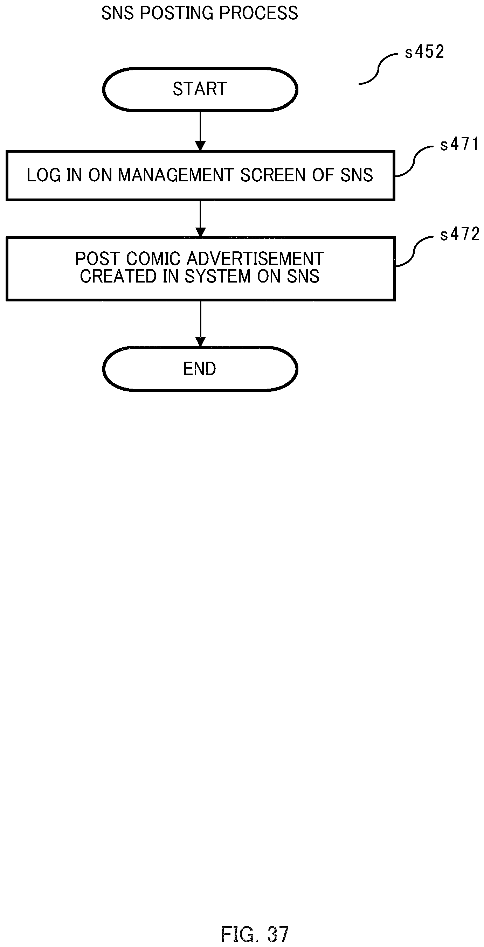

Fig. 37 is a flowchart explaining details of the SNS posting process s452. The saving part 15 logs in to a server apparatus 3 for the SNS identified in s461 (s471) . For example, the saving part 15 logs in to this server apparatus 3 by inputting the user's user ID and password or the like on a management screen for the server apparatus 3.

The saving part 15 posts the image of the comic advertisement by sending the image of the comic advertisement to the server apparatus 3 which the saving part 15 logged in to in s471 (s472). This ends the SNS posting process s452.

### -Automatic Template Generation Process-

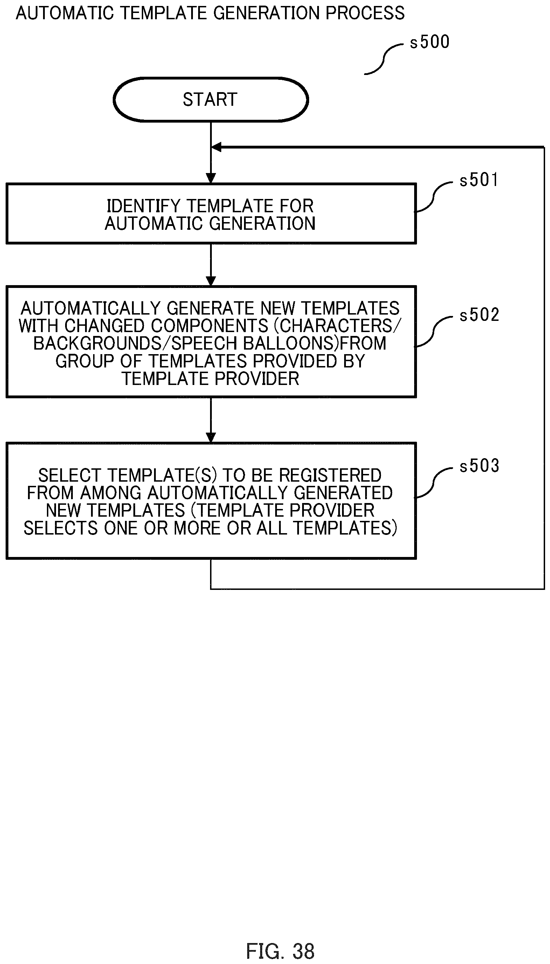

Next, Fig. 38 is a flowchart explaining an example of the automatic template generation process s500. The automatic template generation part 16 identifies a template based on which to automatically generate a new template among templates registered by a provider in the comic advertisement creation assistance apparatus 10 (s501). For example, the automatic template generation part 16 displays a screen which displays a list of templates registered in the template DB 100 and accepts selection of a template by the provider on the screen of the provider terminal 30.

The automatic template generation part 16 generates one or more new templates corresponding to the template identified in s501 with the components (such as characters, backgrounds, or speech balloons) in its panels changed to the characters, backgrounds, or speech balloons in the panels in other templates provided by the same provider (s502).

For example, the automatic template generation part 16 identifies all of the panels in other templates having characters, backgrounds, or speech balloons with different attributes from the attributes of the characters, backgrounds, or speech balloons in the panels in the template identified in s501 and combines panels thus identified to the panels in the template identified in s501 to thereby generate a plurality of new templates (e.g., generate a plurality of templates corresponding to the original template with only the background in a given panel changed to various different backgrounds).

Alternatively, the automatic template generation part 16 may create new templates, for example, with a learned model which has learned the tendency of automatically generated templates previously selected by the provider. For example, the automatic template generation part 16 generates a learned model in advance which has learned the relation between the pattern of the components in the panels in each template previously identified in s501 and the corresponding pattern of the components changed among the components in the template finally selected by the provider (described later in s503). Then, in this process, the automatic template generation part 16 inputs the components in the panels in the template identified in s501 this time into the generated learned model to thereby identify the pattern of changed components. The automatic template generation part 16 searches for templates having the identified pattern of components and combines these to thereby generate a plurality of new templates.

Note that the automatic template generation part 16 sees the new templates as ones by the same creator (provider) as that of the template identified in s501. In this way, a template provider who has registered more templates tends to create more templates and is more likely to be used by more users.

Thereafter, the automatic template generation part 16 identifies one or more templates among the templates created in s502 by accepting selection by the provider (provider terminal 30) (s503). The automatic template generation part 16 then registers information on the identified templates as new templates in the template DB 100 and the like. Thereafter, the processes from s501 will be repeated.

### -Ranking Setting Process-

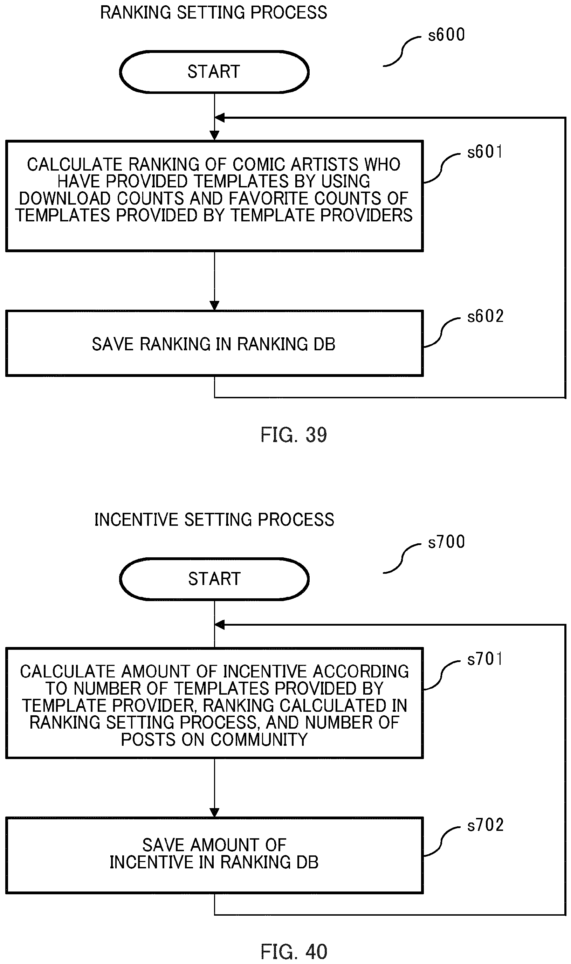

Fig. 39 is a flowchart explaining an example of the ranking setting process s600.

In response to a predetermined input from a provider terminal 30, the ranking setting part 17 creates ranking information of each provider (s601). For example, the ranking setting part 17 obtains the contents of the template DB 100 and creates a list of creators 102 in descending order of the download count 103 and the favorite count 104.

The ranking setting part 17 causes the provider terminal 30 to display the ranking information created in s601 on its screen, and stores the ranking information in the ranking DB 320. Thereafter, the processes from s601 will be repeated.

### -Incentive Setting Process-

Fig. 40 is a flowchart explaining an example of the incentive setting process s700.

In response to a predetermined input from a provider terminal 30, the incentive setting part 18 calculates the amounts of incentive to be given to providers (s701). For example, the incentive setting part 18 obtains the provided (registered) template count, post count, and like count of each provider by referring to the provider achievement DB 310. Also, the incentive setting part 18 obtains ranking information (ranking) of each provider by referring to the ranking DB 320. Then, the incentive setting part 18 calculates the amount of incentive to be given to each provider by calculating a predetermined linear sum with the provided template count, post count, and like count, and ranking mentioned above as variables.

The incentive setting part 18 stores the amount of incentive to be given to each provider calculated in s701 in the ranking DB 320 (s702). Note that the incentive setting part 18 stores the result of the calculation in s701 in the provider achievement DB 310. Then, utilizing a predetermined payment system, the incentive setting part 18 performs a process of paying each calculated amount of incentive to thereby remit the amount of incentive to the corresponding template provider. Thereafter, the processes from s701 will be repeated.

As described above, the comic advertisement creation assistance system 1 according to the embodiment of the present disclosure registers databases for comic image templates and advertisement attribute information (tag information) (such as the template DB 100 and the panel DB 200) in advance, and identifies (recommends) templates which a user should select at the moment (templates highly related to comic images previously searched for or used by the user) from the template database based on the contents of the attributes of an advertisement and a template and the history of templates previously searched for or used by the user.

Thus, by simply designating attributes of a user and a comic image, the comic advertisement creation assistance system 1 according to the embodiment of the present disclosure can identify comic image templates corresponding to the contents of those attributes. In this way, the user can create a comic advertisement through a simple procedure. The user can easily create a comic advertisement without knowing the know-how to produce a comic advertisement.

Moreover, by accumulating templates, which are comic materials for advertisements, as a database, the comic advertisement creation assistance system 1 can continuously provide various types of materials to users. In this way, the comic advertisement creation assistance system 1 serves as a platform on which comic artists can post templates that they produced. Users can obtain suitable templates from a large number of comic images for advertisements registered in this database of the comic advertisement creation assistance apparatus 10.

The description of the above embodiment is intended to facilitate the understanding of the present invention and is not intended to limit the present invention. Changes and modifications can be made to the present invention without departing from the gist thereof, and the present invention includes equivalents thereof.

For example, some of the functions of the apparatuses in the embodiment of the present disclosure may be provided on other apparatuses, or functions of separate apparatuses may be provided on a single apparatus.

Also, in the embodiment of the present disclosure, the input values of the recommendation analysis model are comic image and user attributes, but are not limited to these. For example, a provider attribute may be an input value.

Also, the learned models described in the embodiment of the present disclosure may be created for each business or industry type of users or providers.

Also, the methods of calculating and distributing rewards and special rewards described in the embodiment of the present disclosure are an example, and any calculation methods can be employed.

From the statements herein, at least the following are clear. In other words, the comic advertisement creation assistance system 1 according to the embodiment of the present disclosure, may further comprise a learning part configured to create a learned model which receives designated advertisement attribute information and comic image attribute information and outputs identification information of a comic image in the comic template information, wherein the template recommendation part identifies identification information of a comic image in the comic template information by inputting the advertisement attribute information and comic image attribute information designated by the advertisement creator into the learned model.

In this way, by identifying comic images which a user should select at the moment by using a recommendation analysis model, which is the learned model, the user can obtain a suitable template based on the user's attribute and previous actions.

The comic advertisement creation assistance system 1 according to the embodiment of the present disclosure, may further comprise a questionnaire registration part configured to accept an input of information on an advertisement from the advertisement creator and extract a plurality of comic images from the comic template information based on the input information, wherein the template recommendation part may identify identification information of comic images in the comic template information by inputting the advertisement attribute information and the attribute information of the extracted comic images into the learned model.

In this way, by extracting a plurality of templates from a database based on the user's answers to a questionnaire on an advertisement and identifying a template among the extracted templates by using the learned model, the user can identify a template suitable for the contents of the advertisement desired to be created.

The comic advertisement creation assistance system 1 according to the embodiment of the present disclosure, may further comprise a template switching part configured to accept an input of an attribute of a component in a comic image selected from among the identified comic images from the advertisement creator and identify, from the comic template information, another comic image corresponding to the selected comic image with the component thereof changed to another component having the input attribute.

In this way, by accepting an input of the attribute of a component (such as a character or a background) in a template selected by the user from among the identified (recommended) templates and switching to another template corresponding to the selected comic image with its component changed to another component having the input attribute (template switching process), the user can identify another registered template similar to the selected template and thereby create a comic advertisement from a wider range of templates to choose from.

The comic advertisement creation assistance system 1 according to the embodiment of the present disclosure, wherein the template registration part may store the comic template information containing the plurality of comic images and information on components in the plurality of comic images, and the comic advertisement creation assistance system may further comprise an automatic template generation part configured to generate a new comic image by combining the components in a plurality of comic images in the comic template information.

In this way, by combining components in a plurality of templates to generate new templates, it is possible to automatically generate a large number of variations of templates from a limited number of templates registered by a provider.

The comic advertisement creation assistance system 1 according to the embodiment of the present disclosure, may further comprise a template editing part configured to accept addition of dialogue related to an advertisement to a comic image selected from among the identified comic images, the addition being proposed by the advertisement creator.

In this way, by accepting addition of dialogue to a comic image by a user, the user can create a comic advertisement having a desired advertising content.

The comic advertisement creation assistance system 1 according to the embodiment of the present disclosure, may further comprise a saving part configured to send the comic image with the dialogue added thereto as a comic advertisement to an information processing apparatus on which a plurality of terminals of customers that the advertisement is targeted at are capable of sharing information.

In this way, by posting a completed comic advertisement with dialogue added thereto on a community such as an SNS, the user easily make the created comic advertisement known to customers. Thus, even a user who does not know how to advertise can advertise effectively. The comic advertisement creation assistance system 1 hence supports users' work of distributing advertisements.

The comic advertisement creation assistance system 1 according to the embodiment of the present disclosure, may further comprise a template usage fee distribution part configured to calculate amounts of money to be given to a creator of a comic image selected from among the identified comic images and an administrator of the comic advertisement creation assistance system as rewards for the selected comic image.

In this way, by setting amounts of money to be given to a creator of a template selected by a user and to the system administrator as usage fees (rewards) for the template, the user can perform appropriate right handling without the know-how to pay for the use of the template (license management).

The comic advertisement creation assistance system 1 according to the embodiment of the present disclosure, wherein the template registration part may accept registration of the comic template information from each of a plurality of terminals of comic image creators, and the comic advertisement creation assistance system may further comprise a ranking setting part configured to identify a creator of a comic image selected from among the identified comic images, and create a list of creators corresponding to the number of times each of the creators has been identified.

In this way, by accepting registration of templates by provider terminals 30 in advance and creating a list of providers corresponding to the number of the times their comic images have been selected by users (such as the download count), each template provider can figure out the situation regarding usage by users and use it as a reference for future template creation.

The comic advertisement creation assistance system 1 according to the embodiment of the present disclosure, may further comprise an incentive setting part configured to calculate an amount of a special reward to be given to a creator of a comic image selected from among the identified comic images as a special reward for the selected comic image, the amount of the special reward being calculated according to the number of times the selected comic image was previously selected.

In this way, by setting the amount of incentive for each template according to the number of times the comic image has been selected by users (such as download count), template providers can be encouraged to create templates meeting users' needs.

The comic advertisement creation assistance system 1 according to the embodiment of the present disclosure, may further comprise: a questionnaire registration part configured to accept an input of information on an advertisement from the advertisement creator and extract a plurality of comic images from the comic template information based on the input information; a template switching part configured to accept an input of an attribute of a component in a comic image selected from among the identified comic images from the advertisement creator and identify, from the comic template information, another comic image corresponding to the selected comic image with the component thereof changed to another component having the input attribute; a template editing part configured to accept addition of dialogue related to the advertisement to the comic image selected from among the identified comic images, the addition being proposed by the advertisement creator; a saving part configured to send the comic image with the dialogue added thereto as a comic advertisement to an information processing apparatus on which a plurality of terminals of customers that the advertisement is targeted at are capable of sharing information; a template usage fee distribution part configured to calculate amounts of money to be given to a creator of the comic image selected from among the identified comic images and an administrator of the comic advertisement creation assistance system as rewards for the selected comic image; and a learning part configured to create a learned model which receives designated advertisement attribute information and comic image attribute information and outputs identification information of a comic image in the comic template information, wherein the template recommendation part may identify identification information of comic images in the comic template information by inputting the advertisement attribute information designated by the advertisement creator and the attribute information of the extracted comic images into the learned model.

In this way, the comic advertisement creation assistance system 1 performs a series of processes involved in production of a comic advertisement. This makes it possible to enhance the efficiency and speed of steps in comic advertisement production by a user, and also to complete a procedure from the obtaining of a template, which is comic material, to the production and distribution of a comic advertisement on the system.

The comic advertisement creation assistance system 1 according to the embodiment of the present disclosure, wherein the template registration part may store the comic template information containing the plurality of comic images and information on components in the plurality of comic images, and accept registration of the comic template information from each of a plurality of terminals of comic image creators, and the comic advertisement creation assistance system may further comprise: an automatic template generation part configured to generate a new comic image by combining the components in a plurality of comic images in the comic template information; a ranking setting part configured to identify a creator of a comic image selected from among the identified comic images, and create a list of creators corresponding to the number of times each of the creators has been identified; and an incentive setting part configured to calculate an amount of a special reward to be given to a creator of the comic image selected from among the identified comic images as a special reward for the selected comic image, the amount of the special reward being calculated according to the number of times the selected comic image was previously selected.

In this way, the comic advertisement creation assistance system 1 executes processes involved in a procedure from the registration of templates, which are materials of comic advertisements, to the creation of variations and the payment of rewards (right handling). This makes it possible to support the entirety of comic (template) production by comic artists and the like.

### [Reference Signs List]

- 1: comic advertisement creation assistance system
- 30: provider terminal
- 20: user terminal
- 10: comic advertisement creation assistance apparatus
- 11: template registration part
- 20: template recommendation part

## Claims

1. A comic advertisement creation assistance system comprising:
a processor;
a memory;
a template registration part configured to store comic template information containing a plurality of comic images and attribute information of each of the plurality of comic images; and
a template recommendation part configured to identify comic images from the comic template information based on advertisement attribute information and comic image attribute information designated by an advertisement creator and comic images previously searched for or designated by users, the comic images being related to the previously searched or designated comic images.

2. The comic advertisement creation assistance system according to claim 1, further comprising
a learning part configured to create a learned model which receives designated advertisement attribute information and comic image attribute information and outputs identification information of a comic image in the comic template information, wherein
the template recommendation part identifies identification information of a comic image in the comic template information by inputting the advertisement attribute information and comic image attribute information designated by the advertisement creator into the learned model.

3. The comic advertisement creation assistance system according to claim 2, further comprising
a questionnaire registration part configured to accept an input of information on an advertisement from the advertisement creator and extract a plurality of comic images from the comic template information based on the input information, wherein
the template recommendation part identifies identification information of comic images in the comic template information by inputting the advertisement attribute information and the attribute information of the extracted comic images into the learned model.

4. The comic advertisement creation assistance system according to claim 1, further comprising a template switching part configured to accept an input of an attribute of a component in a comic image selected from among the identified comic images from the advertisement creator and identify, from the comic template information, another comic image corresponding to the selected comic image with the component thereof changed to another component having the input attribute.

5. The comic advertisement creation assistance system according to claim 1, wherein
the template registration part stores the comic template information containing the plurality of comic images and information on components in the plurality of comic images, and
the comic advertisement creation assistance system further comprises an automatic template generation part configured to generate a new comic image by combining the components in a plurality of comic images in the comic template information.

6. The comic advertisement creation assistance system according to claim 1, further comprising a template editing part configured to accept addition of dialogue related to an advertisement to a comic image selected from among the identified comic images, the addition being proposed by the advertisement creator.

7. The comic advertisement creation assistance system according to claim 6, further comprising a saving part configured to send the comic image with the dialogue added thereto as a comic advertisement to an information processing apparatus on which a plurality of terminals of customers that the advertisement is targeted at are capable of sharing information.

8. The comic advertisement creation assistance system according to claim 1, further comprising a template usage fee distribution part configured to calculate amounts of money to be given to a creator of a comic image selected from among the identified comic images and an administrator of the comic advertisement creation assistance system as rewards for the selected comic image.

9. The comic advertisement creation assistance system according to claim 1, wherein
the template registration part accepts registration of the comic template information from each of a plurality of terminals of comic image creators, and
the comic advertisement creation assistance system further comprises a ranking setting part configured to identify a creator of a comic image selected from among the identified comic images, and create a list of creators corresponding to the number of times each of the creators has been identified.

10. The comic advertisement creation assistance system according to claim 1, further comprising an incentive setting part configured to calculate an amount of a special reward to be given to a creator of a comic image selected from among the identified comic images as a special reward for the selected comic image, the amount of the special reward being calculated according to the number of times the selected comic image was previously selected.

11. The comic advertisement creation assistance system according to claim 1, further comprising:
a questionnaire registration part configured to accept an input of information on an advertisement from the advertisement creator and extract a plurality of comic images from the comic template information based on the input information;
a template switching part configured to accept an input of an attribute of a component in a comic image selected from among the identified comic images from the advertisement creator and identify, from the comic template information, another comic image corresponding to the selected comic image with the component thereof changed to another component having the input attribute;
a template editing part configured to accept addition of dialogue related to the advertisement to the comic image selected from among the identified comic images, the addition being proposed by the advertisement creator;
a saving part configured to send the comic image with the dialogue added thereto as a comic advertisement to an information processing apparatus on which a plurality of terminals of customers that the advertisement is targeted at are capable of sharing information;
a template usage fee distribution part configured to calculate amounts of money to be given to a creator of the comic image selected from among the identified comic images and an administrator of the comic advertisement creation assistance system as rewards for the selected comic image; and
a learning part configured to create a learned model which receives designated advertisement attribute information and comic image attribute information and outputs identification information of a comic image in the comic template information, wherein
the template recommendation part identifies identification information of comic images in the comic template information by inputting the advertisement attribute information designated by the advertisement creator and the attribute information of the extracted comic images into the learned model.

12. The comic advertisement creation assistance system according to claim 1, wherein
the template registration part
stores the comic template information containing the plurality of comic images and information on components in the plurality of comic images, and
accepts registration of the comic template information from each of a plurality of terminals of comic image creators, and
the comic advertisement creation assistance system further comprises:
an automatic template generation part configured to generate a new comic image by combining the components in a plurality of comic images in the comic template information;
a ranking setting part configured to identify a creator of a comic image selected from among the identified comic images, and create a list of creators corresponding to the number of times each of the creators has been identified; and
an incentive setting part configured to calculate an amount of a special reward to be given to a creator of the comic image selected from among the identified comic images as a special reward for the selected comic image, the amount of the special reward being calculated according to the number of times the selected comic image was previously selected.

13. A comic advertisement creation assistance method implemented by an information processing apparatus comprising executing:
a template registration process of storing comic template information containing a plurality of comic images and attribute information of each of the plurality of comic images; and
a template recommendation process of identifying comic images from the comic template information based on advertisement attribute information and comic image attribute information designated by an advertisement creator and comic images previously searched for or designated by users, the comic images being related to the previously searched or designated comic images.
